(19) Europäisches Patentamt
European Patent Office
Office européen des brevets

(11) **EP 4 183 820 A1**

(12) **EUROPEAN PATENT APPLICATION**
published in accordance with Art. 153(4) EPC

(43) Date of publication:
**24.05.2023 Bulletin 2023/21**

(21) Application number: **21841449.8**

(22) Date of filing: **15.07.2021**

(51) International Patent Classification (IPC):
*C08J 3/20* (2006.01)      *C08L 23/06* (2006.01)
*C08L 23/26* (2006.01)      *C08L 77/00* (2006.01)

(52) Cooperative Patent Classification (CPC):
**C08J 3/20; C08L 23/06; C08L 23/26; C08L 77/00**

(86) International application number:
**PCT/JP2021/026628**

(87) International publication number:
**WO 2022/014677 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.07.2020 JP 2020123260
26.01.2021 JP 2021010578**

(71) Applicant: **TOYOTA BOSHOKU KABUSHIKI
KAISHA**
**Kariya-shi, Aichi 448-8651 (JP)**

(72) Inventors:
• **KATO, Keisuke**
  **Kariya-shi, Aichi 448-8651 (JP)**
• **ASAI, Toshihiro**
  **Kariya-shi, Aichi 448-8651 (JP)**
• **NOMURA, Masaaki**
  **Kariya-shi, Aichi 448-8651 (JP)**

(74) Representative: **TBK**
**Bavariaring 4-6**
**80336 München (DE)**

(54) **THERMOPLASTIC RESIN COMPOSITION, AND MODIFIER**

(57) An object of the present invention is to provide a thermoplastic resin composition which contains three components, i.e., a polyethylene, a polyamide and a compatibilizer and is excellent in impact resistance while realizing a reduction in environmental load, and a modifier capable of imparting impact resistance to a polyolefin (provided that polyethylene is excluded). The composition and the modifier each contain a polyethylene, a polyamide and a compatibilizer. The compatibilizer is a modified elastomer having a reactive group that reacts with the polyamide, and the polyethylene and the polyamide have a bio-based carbon content rate of 80% or more according to ISO 16620-2.

[FIG. 1]

**Description**

TECHNICAL FIELD

The present invention relates to a thermoplastic resin composition and a modifier. More specifically, the present invention relates to a thermoplastic resin composition and a modifier, obtained by blending a polyethylene, a polyamide, and a compatibilizer.

BACKGROUND ART

Techniques for obtaining a thermoplastic resin composition having excellent impact resistance using three components, i.e., a polyolefin, a polyamide, and a compatibilizer, are disclosed in Patent Literature 1 and 2.

CITATIONS LIST

PATENT LITERATURE

Patent Literature 1: WO 2013-094763
Patent Literature 2: WO 2013-094764

SUMMARY OF INVENTION

TECHNICAL PROBLEMS

Patent Literatures 1 and 2 disclose that a modified elastomer having a reactive group that reacts with a polyamide is used as a compatibilizer, that a melt-kneaded product obtained by melt-kneading a compatibilizer and a polyamide separately from a polyolefin is used, that the obtained melt-kneaded product and the polyolefin are melt-kneaded to obtain a thermoplastic resin composition as a target product, and that a plant-derived polyamide 11 can be used as the polyamide.

In recent years, building of a sustainable society and reduction in environmental load associated therewith have been highlighted, and there is an increasing demand for coping with such a situation also in the technical field of materials. Specifically, from the viewpoint of reducing $CO_2$ emission, a technique using a plant-derived raw material instead of a fossil-derived raw material such as petroleum has attracted attention, and, as general-purpose resins, plant-derived products of not only polyamides but also polyolefins have been put on the market. However, there is an actual situation in which, as compared with fossil-derived resins that have been used for a long time, both of them have few grades and have not been adjusted to suit various uses. For this reason, there is no situation in which the fossil-derived resins that have been conventionally used can be directly replaced with plant-derived resins, and various difficulties problematically exist in increasing the proportion of the plant-derived resins.

The present invention has been made in view of the above circumstances, and an object of the present invention is to provide a thermoplastic resin composition capable of achieving both high impact resistance and high fluidity using three components, i.e., a polyolefin, a polyamide, and a compatibilizer, while realizing a reduction in environmental load, a method for producing the same, and a molded body using the thermoplastic resin composition. Another object of the present invention is to provide a modifier which contains three components, i.e., a polyethylene, a polyamide, and a compatibilizer, and can impart impact resistance to a polyolefin (provided that polyethylene is excluded) while realizing a reduction in environmental load. Still another object of the present invention is to provide a method for producing a molded body using the modifier.

SOLUTIONS TO PROBLEMS

The present invention is as follows.

[1] A thermoplastic resin composition of the present invention is a thermoplastic resin composition obtained by blending a polyethylene, a polyamide, and a compatibilizer,

wherein the compatibilizer is a modified elastomer having a reactive group that reacts with the polyamide, and
wherein the polyethylene and the polyamide have a bio-based carbon content rate of 80% or more according to ISO 16620-2.

[2] In the thermoplastic resin composition of the present invention, the polyethylene can have an MFR (230°C/2.16 kg) of 20 g/10 min or less.

[3] The thermoplastic resin composition of the present invention can have an MFR (230°C/2.16 kg) of 3 g/10 min or more.

[4] In the thermoplastic resin composition of the present invention, the compatibilizer can have a copolymerized chain derived from ethylene and an α-olefin other than ethylene as a main skeleton, and the reactive group can be an acid-modified group.

[5] In the thermoplastic resin composition of the present invention,

when a total amount of the polyethylene, the polyamide, and the compatibilizer is 100 mass%, an amount of the compatibilizer can be 1 to 30 mass%, and

when a mass proportion of the polyethylene is $R_{PE}$ mass% and a mass proportion of the polyamide is $R_{PA}$ mass% when a total mass proportion of the polyethylene, the polyamide, and the compatibilizer is 100 mass%, $R_{PE}/R_{PA}$ can be 0.3 to 3.5.

[6] The molded body of the present invention is composed of the thermoplastic resin composition of the present invention.

[7] A method for producing the thermoplastic resin composition of the present invention includes: a melt-kneading step of melt-kneading a melt-kneaded product of the polyamide and the compatibilizer with the polyethylene.

[8] A modifier of the present invention is a modifier which modifies a polyolefin (provided that polyethylene is excluded) as a resin to be modified and is capable of improving impact resistance of the resin to be modified,

the modifier containing a polyethylene ($PE_2$), a polyamide, and a compatibilizer,

wherein the compatibilizer is a modified elastomer having a reactive group that reacts with the polyamide, and

wherein the polyethylene ($PE_2$) and the polyamide have a bio-based carbon content rate of 80% or more according to ISO 16620-2.

[9] In the modifier of the present invention, when a total mass proportion of the polyethylene ($PE_2$), the polyamide, and the compatibilizer is 100 mass%, a mass proportion of the polyethylene ($PE_2$) is $R_{PE2}$ mass%, a mass proportion of the polyamide is $R_{PA}$ mass%, and a mass proportion of the compatibilizer is $R_{CB}$ mass%,

$$1 \leq R_{CB} \text{ (mass\%)} \leq 70 \text{ and } 0.3 \leq R_{PE2}/R_{PA} \leq 3.5 \text{ can be established.}$$

[10] In the modifier of the present invention, the polyethylene ($PE_2$) can be a high density polyethylene.

[11] In the modifier of the present invention, the polyethylene ($PE_2$) can have an MFR (230°C/2.16 kg) of 20 g/10 min or less.

[12] In the modifier of the present invention, the polyamide can have a structure in which a hydrocarbon group sandwiched between adjacent amide bonds in a main chain has a carbon number of a linear-chain part of 6 or more.

[13] In the modifier of the present invention, the compatibilizer can have a copolymerized chain derived from ethylene and an α-olefin other than ethylene as a main skeleton, and the reactive group can be an acid-modified group.

[14] In the modifier of the present invention, the polyolefin can be a block polypropylene.

[15] The modifier of the present invention can have an MFR (230°C/2.16 kg) of 3 to 17 g/10 min.

[16] The modifier of the present invention can be obtained by melt-kneading a melt-kneaded product of the polyamide and the compatibilizer with the polyethylene ($PE_2$).

[17] A method for producing a molded body of the present invention can include a molding step of molding a raw material obtained by dry-blending a polyolefin (provided that polyethylene is excluded) as a resin to be modified with the modifier of the present invention.

[18] In the method for producing a molded body of the present invention, when a total amount of the resin to be modified and the modifier is 100 mass%, an amount of the modifier can be 30 to 70 mass%.

ADVANTAGEOUS EFFECTS OF INVENTION

According to the thermoplastic resin composition of the present invention and the method for producing the same, it is possible to achieve both high impact resistance and high fluidity by using three components, i.e., a polyolefin, a polyamide, and a compatibilizer while realizing a reduction in environmental load.

According to the molded body of the present invention, it is possible to realize a reduction in environmental load while forming a molded body having high impact resistance by using three components, i.e., a polyolefin, a polyamide, and a compatibilizer.

According to the modifier of the present invention, impact resistance can be imparted to polyolefins except polyethylene while realizing a reduction in environmental load.

According to the method for producing a molded body of the present invention, it is possible to easily obtain a polyethylene-based molded body having excellent impact resistance while realizing a reduction in environmental load through a small number of steps without undergoing a preliminary kneading step.

BRIEF DESCRIPTION OF DRAWINGS

Fig. 1 shows a phase structure obtained by magnifying a surface of a test piece of Experimental Example 1-6 (Experimental Example 2-1) 5,000 times.

Fig. 2 shows a phase structure obtained by magnifying the surface of the test piece of Experimental Example 1-6 (Experimental Example 2-1) 10,000 times.

Fig. 3 shows a phase structure obtained by magnifying the surface of the test piece of Experimental Example 1-6 (Experimental Example 2-1) 20,000 times.

Fig. 4 shows a phase structure obtained by magnifying a surface of a test piece of Experimental Example 1-8 (Experimental Example 2-5) 5,000 times.

Fig. 5 shows a phase structure obtained by magnifying the surface of the test piece of Experimental Example 1-8 (Experimental Example 2-5) 10,000 times.

Fig. 6 shows a phase structure obtained by magnifying the surface of the test piece of Experimental Example 1-8 (Experimental Example 2-5) 20,000 times.

DESCRIPTION OF EMBODIMENTS

The particulars described herein are given by way of example and for the purpose of illustrative discussion of the embodiments of the present invention, and are presented for the purpose of providing what is believed to be the description from which the principles and conceptual features of the present invention can be most effectively and readily understood. In this regard, no attempt is made to show structural details of the present invention in more detail than is necessary for the fundamental understanding of the present invention, and the description is taken with the drawings making apparent to those skilled in the art how several forms of the present invention may be embodied in practice.

In the present specification, the description "XX to YY" means "XX or more and YY or less".

[1] Thermoplastic Resin Composition

The thermoplastic resin composition of the present invention is a thermoplastic resin composition obtained by blending a polyethylene, a polyamide, and a compatibilizer. Among these components, the compatibilizer is a modified elastomer having a reactive group that reacts with the polyamide. Furthermore, the polyethylene and the polyamide have a bio-based carbon content rate of 80% or more according to ISO 16620-2.

<1> Polyethylene (plant-derived PE)

The polyethylene has a bio-based carbon content rate of 80% or more, as measured according to the standard ISO 16620-2 (in the present specification, the polyethylene is also simply described as "plant-derived PE"). The bio-based carbon content rate is a value obtained by calculating a plant-derived carbon content rate (bio-based carbon content rate) based on a proportion of $^{14}C$ in total constituent carbon.

The plant-derived PE used in the present invention has only to have a bio-based carbon content rate of 80% or more (may have a bio-based carbon content rate of 100%), may further have a bio-based carbon content rate of 85% or more, and may further have a bio-based carbon content rate of 90% or more.

The bio-based carbon content rate can be a value as measured according to the standard ASTM D6866, in addition to ISO 16620-2. Usually, values according to these standards are substantially the same.

The plant-derived PE is a polymer having a structure (methylene chain) in which methylene groups ($-CH_2-$) are linked as a main skeleton. The methylene chain is a constitutional unit derived particularly from ethylene. Therefore, the plant-derived PE includes a homopolymer of ethylene and a copolymer of ethylene and another olefin. In a case of a copolymer, usually 50% or more of a total number of constitutional units is derived from ethylene. Examples of another olefin include an olefin having 3 carbon atoms (propylene), an olefin having 4 carbon atoms (e.g., 1-butene), an olefin having 5 carbon atoms (3-methyl-1 butene, 1-pentene, etc.), an olefin having 6 carbon atoms (3-methyl-1 pentene, 4-methyl-1 pentene, 1-hexene, etc.), and an olefin having 8 carbon atoms (e.g., 1-octene). These may be used singly, or two or more thereof may be used in combination.

Specifically, examples of the plant-derived PE as a copolymer include an ethylene-1-butene copolymer, an ethylene-1-hexene copolymer, an ethylene-1-octene copolymer, and an ethylene-4-methyl-1-pentene copolymer. These may be used singly, or two or more thereof may be used in combination. Further, when two or more of these copolymers are used, both pellets made of a mixed resin and a pellet mixture are included.

In addition, regardless of whether the plant-derived PE is a homopolymer of ethylene or a copolymer of ethylene and another olefin, the plant-derived PE becomes plant-derived due to the fact that a monomer that forms these polymers is derived from a plant raw material. A total amount of the monomer may be a plant-derived monomer, or only a part thereof may be a plant-derived monomer (that is, a fossil-derived monomer may be contained in the other part). That is, as a result, the plant-derived PE has only to have a bio-based carbon content rate of 80% or more.

Although various properties of the plant-derived PE are not limited, it is preferable that the plant-derived PE be a high-density polyolefin having a density of 0.942 g/cm$^3$ or more and have an MFR (230°C/2.16 kg) of 35 g/10 min or less. The MFR of the plant-derived PE is 35 g/10 min or less (usually, 1 g/10 min or more), so that the fluidity can be increased while excellent impact resistance properties of the resulting thermoplastic resin composition is obtained. Further, the MFR is preferably 20 g/10 min or less, and more preferably 15 g/10 min or less. Alower limit is not limited, but is preferably 2 g/10 min or more, and more preferably 3 g/10 min or more, from the viewpoint of ease of melt-kneading.

In the present invention, the MFR (230°C/2.16 kg) of the plant-derived PE is a value as measured according to the standard ISO 1133 or ASTM D1238. Values according to these standards are usually substantially the same.

As described above, the density of the plant-derived PE is preferably 0.942 g/cm$^3$ or more, and, further, more preferably 0.950 g/cm$^3$ or more. An upper limit of the density is not limited, but is preferably 0.954 g/cm$^3$ or less.

Achievement of both the MFR and the density described above can be adjusted by linearity, a branching amount, a molecular weight, and the like of the plant-derived PE.

In the present invention, the density of the plant-derived PE is a value as measured according to the standard ISO 1183 or ASTM D792. Values according to these standards are usually substantially the same.

Furthermore, the MFR (230°C/2.16 kg) of the plant-derived PE is preferably small. Specifically, the MFR is preferably closer to an MFR (230°C/2.16 kg) of a melt-kneaded product obtained from a plant-derived PA and a compatibilizer, which will be described later. That is, it is considered that, as for kneading of the plant-derived PA and the compatibilizer can be promoted by a reaction between them, and the kneading of them is hardly affected by a difference in MFR. On the other hand, in kneading of the plant-derived PE and the melt-kneaded product (the melt-kneaded product of the plant-derived PA and the compatibilizer), they are not reacted. Thus, it is considered that the kneading of them is easily affected by a difference in MFR therebetween. Therefore, it is considered that kneadability is improved by bringing the MFR of the plant-derived PE and the MFR of the melt-kneaded product close to each other, and that the impact resistance can be improved accordingly.

Specifically, when the MFR (230°C/2.16 kg) of the plant-derived PE is $M_{PE}$ (g/10 min) and the MFR (230°C/2.16 kg) of the melt-kneaded product of the plant-derived PA and the compatibilizer is $M_{PX}$ (g/10 min), a ratio between them, $M_{PE/PX}$ (= $M_{PF}/M_{PX}$), is preferably $0.5 \leq M_{PE/PX} < 20$, more preferably $1 \leq M_{PE/PX} \leq 17$, even more preferably $2 \leq M_{PE/PX} < 13$, and particularly preferably $5 \leq M_{PE/PX} \leq 10$.

Although a range of $M_{PX}$ is not limited, for example, $0.1 \leq M_{PX}$ (g/10 min) $\leq 10$ can be set, further $0.5 \leq M_{PX}$ (g/10 min) $\leq 5$ can be set, and further $1 \leq M_{PX}$ (g/10 min) $\leq 3$ can be set.

<2> Polyamide (plant-derived PA)

The polyamide has a bio-based carbon content rate of 80% or more, as measured according to the standard ISO 16620-2 (in the present specification, the polyamide is also simply described as "plant-derived PA"). The bio-based carbon content rate is a value obtained by calculating a plant-derived carbon content rate (bio-based carbon content rate) based on a proportion of $^{14}C$ in total constituent carbon.

The plant-derived PA used in the present invention has only to have a bio-based carbon content rate of 80% or more (may have a bio-based carbon content rate of 100%), may further have a bio-based carbon content rate of 90% or more, and may further have a bio-based carbon content rate of 95% or more.

The bio-based carbon content rate can be a value as measured according to the standard ASTM D6866, in addition to ISO 16620-2. Usually, values according to these standards are substantially the same.

The plant-derived PA is a polymer having a structure in which hydrocarbon groups (in particular, methylene chain) are linked via amide bonds (-NH-CO-) as a main skeleton.

Examples of a monomer constituting the plant-derived PA include amino acids such as 6-aminocaproic acid, 11-aminoundecanoic acid, 12-aminododecanoic acid, and para-aminomethylbenzoic acid, and lactams such as ε-caprolactam, undecane lactam, and ω-lauryl lactam. These may be used singly, or two or more thereof may be used in combination. Among them, from the viewpoint of a high bio-based carbon content rate, the plant-derived PA preferably contains a large amount of plant-derived 11-aminoundecanoic acid.

Furthermore, the plant-derived PA can also be obtained by copolymerization of a diamine and a dicarboxylic acid. In this case, examples of diamines as monomers include aliphatic diamines such as ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, 2-methyl-1,5-diaminopentane, and 2-methyl-1,8-diaminooctane; alicyclic diamines such as cyclohexanediamine and bis-(4-aminocyclohexyl)methane; and aromatic diamines such as xylylenediamine (p-phenylenediamine, m-phenylenediamine, etc.). These may be used singly, or two or more thereof may be used in combination. Among them, from the viewpoint of a high bio-based carbon content rate, the plant-derived PA preferably contains a large amount of plant-derived 1,10-diaminodecane and/or 1,5-diaminopentane.

Further, examples of the dicarboxylic acid as a monomer include aliphatic dicarboxylic acids such as oxalic acid, malonic acid, succinic acid, glutaric acid, adipic acid, pimelic acid, suberic acid, azelaic acid, sebacic acid, undecanedioic acid, dodecanedioic acid, brasylic acid, tetradecanedioic acid, pentadecanoic acid, and octadecanedioic acid; alicyclic dicarboxylic acids such as cyclohexane dicarboxylic acid; and aromatic dicarboxylic acids such as phthalic acid, terephthalic acid, isophthalic acid, and naphthalene dicarboxylic acid; and, further, furandicarboxylic acid. These may be used singly, or two or more thereof may be used in combination. Among them, from the viewpoint of a high bio-based carbon content rate, the plant-derived PA preferably contains a large amount of plant-derived sebacic acid, furandicarboxylic acid, and/or glutaric acid.

Furthermore, the plant-derived PA preferably has a structure in which a hydrocarbon group sandwiched between adjacent amide bonds in a main chain has a carbon number of a linear-chain part of 6 or more. Therefore, examples of the plant-derived PA include polyamide 11 (PA11), polyamide 1010 (PA1010), polyamide 1012 (PA1012), polyamide 610 (PA610), polyamide 510 (PA510), polyamide (PA410), polyamide (PA10T), polyamide 11T (PA11T), and polyamide MXD 10 (MXD 10). These polyamides may be used singly, or two or more thereof may be used in combination. Further, when two or more of these copolymers are used, both pellets made of a mixed resin and a pellet mixture are included.

In addition, regardless of whether the plant-derived PA is a homopolymer of an amino acid or a lactam or a copolymer of a diamine and a dicarboxylic acid, the plant-derived PA becomes plant-derived due to the fact that a monomer that forms these polymers is derived from a plant raw material. A total amount of the monomer may be a plant-derived monomer, or only a part thereof may be a plant-derived monomer (that is, a fossil-derived monomer may be contained in the other part). That is, as a result, the plant-derived PA has only to have a bio-based carbon content rate of 80% or more.

Although various properties of the plant-derived PA are not limited, it is preferable that the plant-derived PA is a polyamide having a density of 1.15 g/cm³ or less and have an MFR (230°C/2.16 kg) of 50 g/10 min or less. The MFR of the plant-derived PA is 50 g/10 min or less (usually, 1 g/10 min or more), so that the fluidity can be increased while excellent impact resistance properties of the resulting thermoplastic resin composition is obtained. The MFR is even more preferably 40 g/10 min or less, and more preferably 35 g/10 min or less. A lower limit is not limited, but is preferably 3 g/10 min or more, and more preferably 5 g/10 min or more, from the viewpoint of ease of melt-kneading.

In the present invention, the MFR (230°C/2.16 kg) of the plant-derived PA is a value as measured according to the standard ISO 1133 or ASTM D1238. Values according to these standards are usually substantially the same.

As described above, the density of the plant-derived PA is preferably 1.15 g/cm³ or less, and, further, more preferably 1.08 g/cm³ or less. A lower limit of the density is not limited, but is preferably 0.98 g/cm³ or more.

Achievement of both the MFR and the density can be adjusted by linearity, a branching amount, a molecular weight, and the like of the plant-derived PA.

In the present invention, the density of the plant-derived PA is a value as measured according to the standard ISO 1183 or ASTM D792. Values according to these standards are usually substantially the same.

<3> Compatibilizer

The compatibilizer is a modified elastomer having a reactive group that reacts with the plant-derived PA. Furthermore, the compatibilizer is preferably a component having affinity for the plant-derived PE. In this case, the compatibilizer is a component having a compatibilizing effect on the plant-derived PE and the plant-derived PA. That is, the compatibilizer is preferably a compatibilizer for the plant-derived PE and the plant-derived PA.

In the present thermoplastic resin composition, the compatibilizer may be reacted entirely with the plant-derived PA, or may be reacted only partially therewith.

The reactive group of the modified elastomer has only to have reactivity with the plant-derived PA, and examples thereof include an acid anhydride group (-CO-O-OC-), a carboxyl group (-COOH), an epoxy group {-C$_2$O (a three-

membered ring structure composed of two carbon atoms and one oxygen atom)}, an oxazoline group ($-C_3H_4NO$), and an isocyanate group (-NCO). These may be used singly, or two or more thereof may be used in combination.

A modification amount of the modified elastomer by the reactive group is not limited. The modified elastomer has only to have one or more reactive groups, and, further, preferably has 1 or more and 50 or less reactive groups, more preferably has 3 or more and 30 or less reactive groups, and particularly preferably has 5 or more and 20 or less reactive groups, in one molecule.

Examples of the modified elastomer include polymers using various monomers capable of introducing a reactive group (modified elastomers obtained by polymerization using monomers capable of introducing a reactive group), oxidative decomposition products of various polymers (modified elastomers in which a reactive group is formed by oxidative decomposition), and graft polymers of organic acids to various polymers (modified elastomers in which a reactive group is introduced by graft polymerization of organic acids). These may be used singly, or two or more thereof may be used in combination. These may be used singly, or two or more thereof may be used in combination.

Examples of the monomer capable of introducing a reactive group include a monomer having a polymerizable unsaturated bond and an acid anhydride group, a monomer having a polymerizable unsaturated bond and a carboxyl group, and a monomer having a polymerizable unsaturated bond and an epoxy group.

Examples of the monomer include acid anhydrides such as maleic anhydride, itaconic anhydride, succinic anhydride, glutaric anhydride, adipic anhydride, citraconic anhydride, tetrahydrophthalic anhydride, and butenyl succinic anhydride; and carboxylic acids such as maleic acid, itaconic acid, fumaric acid, acrylic acid, and methacrylic acid. These may be used singly, or two or more thereof may be used in combination. Among these compounds, acid anhydrides are preferred, maleic anhydride and itaconic anhydride are more preferred, and maleic anhydride is particularly preferred.

Furthermore, the type of resin constituting the skeleton of the modified elastomer (hereinafter, referred to as "backbone resin") is not particularly limited, and various thermoplastic resins can be used. As the skeleton resin, an olefin-based elastomer (olefin-based thermoplastic elastomer) and/or a styrenic elastomer (styrenic thermoplastic elastomer) can be used.

Among them, examples of the olefin-based elastomer include those obtained by copolymerizing two or more of olefins.

Examples of the olefins include ethylene, propylene, and an α-olefin having 4 to 8 carbon atoms. Among them, examples of the α-olefin having 4 to 8 carbon atoms include ethylene, propylene, 1-butene, 3-methyl-1-butene, 1-pentene, 3-methyl-1-pentene, 4-methyl-1-pentene, 1-hexene, and 1-octene.

Among these, as the olefin-based elastomer, a copolymer of ethylene and an α-olefin other than ethylene is preferred. That is, as the compatibilizer, a modified elastomer having a copolymerized chain derived from ethylene and an α-olefin other than ethylene as a main skeleton and having a reactive group that reacts with the plant-derived PA is preferable. When such an olefin-based elastomer is used, a thermoplastic resin composition that gives a molded body having particularly excellent impact resistance properties can be obtained. The α-olefin other than ethylene is preferably an α-olefin having 3 to 8 carbon atoms, and more preferably an α-olefin having 4 to 8 carbon atoms.

Among those described above, examples of the copolymer of ethylene and an α-olefin having 3 to 8 carbon atoms include an ethylene-propylene copolymer (EPR), an ethylene-1-butene copolymer (EBR), an ethylene-1-pentene copolymer, and an ethylene-1-octene copolymer (EOR). Examples of the copolymer of propylene and an α-olefin having 4 to 8 carbon atoms include a propylene-1-butene copolymer (PBR), a propylene-1-pentene copolymer, and a propylene-1-octene copolymer (POR). These may be used singly, or two or more thereof may be used in combination. Further, when two or more of these copolymers are used, both pellets made of a mixed resin and a pellet mixture are included.

On the other hand, the styrene thermoplastic elastomer is a styrenic thermoplastic elastomer having a styrene skeleton. When the styrenic thermoplastic elastomer is used, a molded body having particularly excellent impact resistance properties can be produced.

More specific examples of the styrenic thermoplastic elastomer include a block copolymer of a styrenic compound and a conjugated diene compound, and a hydrogenated product thereof.

Of them, examples of the styrenic compound include alkyl styrenes such as styrene, α-methylstyrene, p-methylstyrene, and p-t-butylstyrene; p-methoxystyrene, and vinylnaphthalene. These may be used singly, or two or more thereof may be used in combination.

On the other hand, examples of the conjugated diene compound include butadiene, isoprene, piperylene, methylpentadiene, phenylbutadiene, 3,4-dimethyl-1,3-hexadiene, and 4,5-diethyl-1,3-octadiene. These may be used singly, or two or more thereof may be used in combination.

Specifically, examples of the styrenic elastomer include a styrene-butadiene-styrene copolymer (SBS), a styrene-isoprene-styrene copolymer (SIS), a styrene-ethylene/butylene-styrene copolymer (SEBS), and a styrene-ethylene/propylene-styrene copolymer (SEPS). These may be used singly, or two or more thereof may be used in combination. Further, when two or more of these copolymers are used, both pellets made of a mixed resin and a pellet mixture are included. Among these, SEBS is preferred.

Although various properties of the compatibilizer are not limited, it is preferable that the compatibilizer is a modified elastomer having a density of 0.90 g/cm$^3$ or less and have an MFR (230°C/2.16 kg) of 10 g/10 min or less. The MFR of the compatibilizer is 10 g/10 min or less (usually, 0.5 g/10 min or more), so that the fluidity can be increased while excellent impact resistance properties of the resulting thermoplastic resin composition is obtained. Further, the MFR is preferably 7 g/10 min or less, and more preferably 5 g/10 min or less. An upper limit is not limited, but is preferably 0.5 g/10 min or more, and more preferably 1.0 g/10 min or more, from the viewpoint of ease of melt-kneading.

In the present invention, the MFR (230°C/2.16 kg) of the compatibilizer is a value as measured according to the standard ISO 1133 or ASTM D1238. Values according to these standards are usually substantially the same.

As described above, the density of the compatibilizer is preferably 0.90 g/cm$^3$ or less, and, further, more preferably 0.89 g/cm$^3$ or less. A lower limit of the density is not limited, but is preferably 0.85 g/cm$^3$ or more.

Achievement of both the MFR and the density can be adjusted by linearity, a branching amount, a molecular weight, a modification amount, and the like of the compatibilizer.

In the present invention, the density of the compatibilizer is a value as measured according to the standard ISO 1183 or ASTM D792. Values according to these standards are usually substantially the same.

The molecular weight of the modified elastomer is not particularly limited, but a weight average molecular weight is preferably 10,000 or more and 500,000 or less, more preferably 35,000 or more and 500,000 or less, and particularly preferably 35,000 or more and 300,000 or less. The weight average molecular weight is measured by a GPC method (in terms of standard polystyrene).

<4> Blending of Each Component

When a total mass proportion of the plant-derived PE, the plant-derived PA, and the compatibilizer is 100 mass%, a mass proportion of the plant-derived PE (hereinafter, this mass proportion is also referred to as "$R_{PE}$") is preferably 10 to 90 mass%, more preferably 13 to 85 mass%, even more preferably 17 to 80 mass%, still even more preferably 20 to 75 mass%, still even more preferably 23 to 70 mass%, and still even more preferably 25 to 65 mass%.

That is, when a total proportion of the plant-derived PE, the plant-derived PA, and the compatibilizer is 100 mass%, a total proportion (hereinafter, this mass proportion is also referred to as "$R_{PA+CB}$") of the plant-derived PA and the compatibilizer is preferably 10 to 90 mass%, more preferably 15 to 87 mass%, even more preferably 20 to 83 mass%, still even more preferably 25 to 80 mass%, still even more preferably 30 to 77 mass%, and still even more preferably 35 to 75 mass%.

When the total mass proportion of the plant-derived PE, the plant-derived PA, and the compatibilizer is 100 mass%, a mass proportion of the plant-derived PA (hereinafter, this mass proportion is also referred to as "$R_{PA}$") is preferably 1 to 80 mass%, more preferably 3 to 75 mass%, even more preferably 5 to 70 mass%, still even more preferably 10 to 75 mass%, still even more preferably 15 to 70 mass%, and still even more preferably 20 to 65 mass%.

When the total mass proportion of the plant-derived PE, the plant-derived PA, and the compatibilizer is 100 mass%, a mass proportion of the compatibilizer (hereinafter, this mass proportion is also referred to as "$R_{CB}$") is preferably 1 to 70 mass%, more preferably 2 to 60 mass%, even more preferably 2 to 50 mass%, still even more preferably 3 to 40 mass%, still even more preferably 3 to 35 mass%, and still even more preferably 4 to 30 mass%.

When a total mass proportion of the plant-derived PA and the compatibilizer is 100 mass%, a mass proportion of the compatibilizer is preferably 3 to 70 mass%, more preferably 4 to 65 mass%, even more preferably 5 to 60 mass%, still even more preferably 6 to 55 mass%, still even more preferably 7 to 45 mass%, and still even more preferably 8 to 40 mass%.

Furthermore, when the total mass proportion of the plant-derived PE, the plant-derived PA, and the compatibilizer is 100 mass%, and the mass proportion $R_{CB}$ of the compatibilizer is 1 to 30 mass%, a ratio ($R_{PE}/R_{PA}$) of the mass proportion $R_{PE}$ of the plant-derived PE to the mass proportion $R_{PA}$ of the plant-derived PA is preferably 0.3 to 3.5. Further, the ratio ($R_{PE}/R_{PA}$) is more preferably 0.4 to 2.0, even more preferably 0.35 to 2.00, still even more preferably 0.40 to 1.50, and particularly preferably 0.45 to 1.20.

In the above ranges, a thermoplastic resin composition having a Charpy impact strength of 70 to 95 kJ/m$^2$ (further, 73 to 90 kJ/m$^2$, in particular 75 to 87 kJ/m$^2$) and an MFR (230°C/2.16 kg) of 12 to 28 g/10 min (further 16 to 27 g/10 min, in particular 17 to 26 g/10 min) can be obtained.

In addition, in particular, in a range in which the mass proportion $R_{PA}$ of the plant-derived PA is higher than the mass proportion $R_{PE}$ of the plant-derived PE (that is, $R_{PA} > R_{PE}$), when an attempt is made to obtain a thermoplastic resin composition having high impact resistance and high fluidity, $R_{PE}:R_{PA}:R_{CB}$ is preferably 20 to 45 mass%:50 to 80 mass%:1 to 25 mass%, more preferably 24 to 40 mass%:52 to 70 mass%:3 to 18 mass%, and particularly preferably 27 to 35 mass%:55 to 65 mass%:6 to 14 mass%.

In the above ranges, a thermoplastic resin composition having a Charpy impact strength of 70 to 95 kJ/m$^2$ (further, 73 to 90 kJ/m$^2$, in particular 75 to 87 kJ/m$^2$) and an MFR (230°C/2.16 kg) of 12 to 28 g/10 min (further 16 to 27 g/10 min, in particular 17 to 26 g/10 min) can be obtained.

Furthermore, also in the above ranges, when the total mass proportion of the plant-derived PA and the compatibilizer is 100 mass%, the mass proportion of the compatibilizer is preferably 4 to 24 mass%, more preferably 7 to 20 mass%, and even more preferably 11 to 17 mass%.

Furthermore, in particular, in a range in which the mass proportion $R_{PA}$ of the plant-derived PA is lower than the mass proportion $R_{PE}$ of the plant-derived PE (that is, $R_{PA} < R_{PE}$), when an attempt is made to obtain a thermoplastic resin composition having high impact resistance and high fluidity, $R_{PE} : R_{PA} : R_{CB}$ is preferably 35 to 65 mass% : 30 to 60 mass% : 1 to 20 mass%, more preferably 40 to 60 mass% : 36 to 55 mass% : 2 to 13 mass%, and particularly preferably 47 to 55 mass% : 42 to 48 mass% : 3 to 8 mass%.

In the above ranges, a thermoplastic resin composition having a Charpy impact strength of 10 to 50 kJ/m$^2$ (further, 15 to 40 kJ/m$^2$, in particular 17 to 30 kJ/m$^2$) and an MFR (230°C/2.16 kg) of 10 to 28 g/10 min (further 12 to 25 g/10 min, in particular 14 to 20 g/10 min) can be obtained.

Furthermore, also in the above range, when the total mass proportion of the plant-derived PA and the compatibilizer is 100 mass%, the mass proportion of the compatibilizer is preferably 5 to 24 mass%, more preferably 6 to 18 mass%, and even more preferably 7 to 13 mass%.

Although the fluidity of the thermoplastic resin composition of the present invention is not limited, the density is 0.93 to 1.00 g/cm$^3$, and the MFR (230°C/2.16 kg) can be set to 3 g/10 min or more (usually, 30 g/10 min or less). The MFR can be further set to 6 g/10 min or more, further set to 12 g/10 min or more, and further set to 17 g/10 min or more. An upper limit value is not limited, but can be 27 g/10 min or less.

In the present invention, the MFR (230°C/2.16 kg) of the compatibilizer is a value as measured according to the standard ISO 1133 or ASTM D1238. Values according to these standards are usually substantially the same.

The thermoplastic resin composition of the present invention (molded body formed using the thermoplastic resin composition of the present invention) can have specific phase structures (1) to (3).

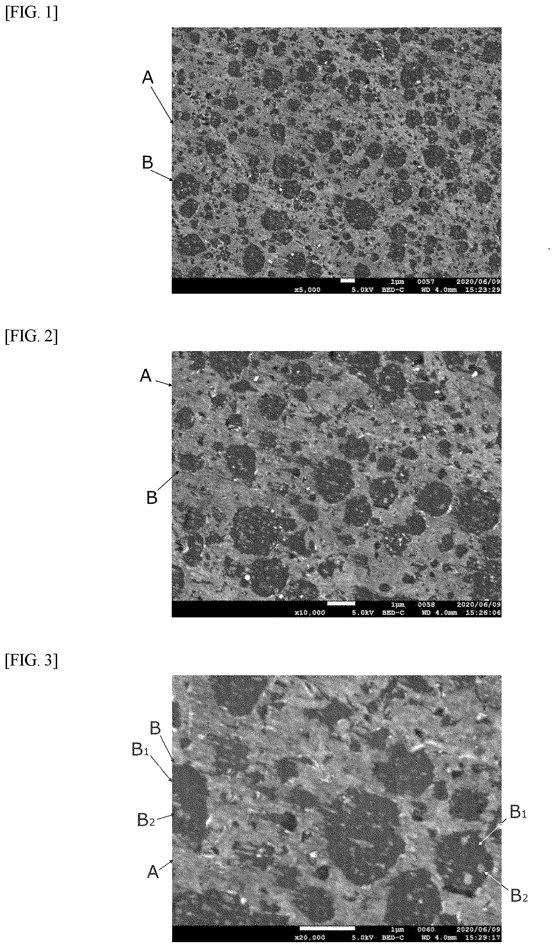

Specifically, it can have (1) a phase structure including a continuous phase (A) of the plant-derived PA and a dispersed phase (B) of the plant-derived PE (see Fig. 1 to Fig. 3). Furthermore, the dispersed phase (B) can have a continuous phase (B$_1$) (that is, continuous phase B$_1$ in the dispersed phase) containing the plant-derived PE and a finely dispersed phase (B$_2$) (that is, dispersed phase B$_2$ in the dispersed phase) dispersed in the continuous phase B$_1$ in the dispersed phase (see Fig. 3).

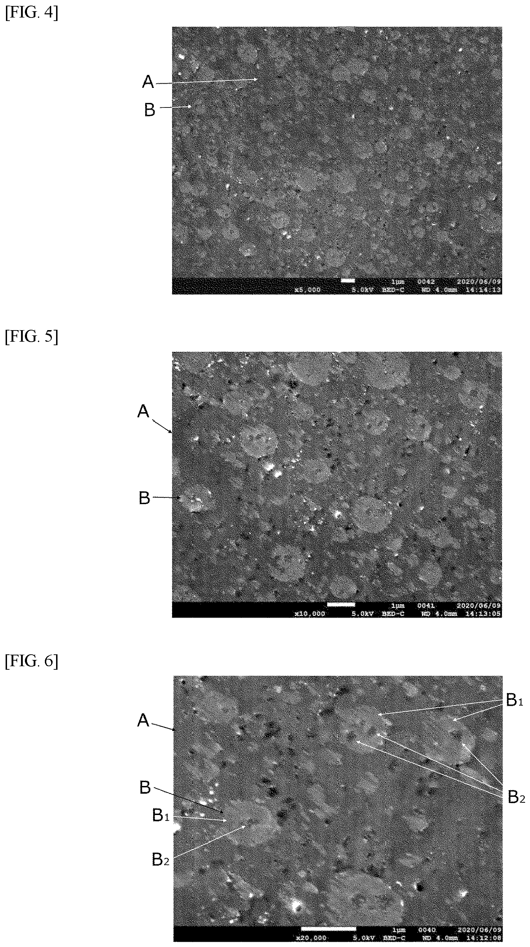

Also, it can have (2) a phase structure including a continuous phase (A) of the plant-derived PE and a dispersed phase (B) of the plant-derived PA (see Fig. 4 to Fig. 6). Furthermore, the dispersed phase (B) can have a continuous phase (B$_1$) (that is, continuous phase B$_1$ in the dispersed phase) containing the plant-derived PA and a finely dispersed phase (B$_2$) (that is, dispersed phase B$_2$ in the dispersed phase) dispersed in the continuous phase B$_1$ in the dispersed phase (see Fig. 6). Excellent impact resistance properties can be obtained particularly by the phase structure having the finely dispersed phase (B$_2$).

Furthermore, as a phase structure (3), a co-continuous structure in which the phase structures (1) and (2) are mixed can be exhibited.

In particular, when the phase structures (1) and (2) described above are exhibited, excellent impact resistance properties can be obtained by the phase structure having the finely dispersed phase (B$_2$). Similarly, in a case where the thermoplastic resin composition has the co-continuous structure (3), excellent impact resistance properties can be obtained.

In a case where thermoplastic resin composition has any of the phase structures described above, a size of the dispersed phase contained in the continuous phase is not limited, and an average diameter (average particle diameter) thereof is preferably 10,000 nm or less, more preferably 50 to 8000 nm, and even more preferably 100 to 4000 nm. The average diameter of the dispersed phase is an average value (nm) of maximum lengths of 50 dispersed phases randomly selected in an image obtained using an electron microscope.

In addition, in a case where the thermoplastic resin composition has the dispersed phase described above, a size of the finely dispersed phase contained in the dispersed phase is not limited, and an average diameter (average particle diameter) thereof is preferably 5 to 1000 nm, more preferably 5 to 600 nm, even more preferably 10 to 400 nm, and particularly preferably 15 to 350 nm. The average diameter of the finely dispersed phase is an average value (nm) of maximum lengths of 100 finely dispersed phases randomly selected in an image obtained using an electron microscope.

<5> Other Components

The thermoplastic resin composition of the present invention can contain any other component, in addition to the plant-derived PE, the plant-derived PA, and the compatibilizer described above.

When the other component is a thermoplastic polymer which can act similarly to the plant-derived PE, the plant-derived PA, and the compatibilizer (provided that components functioning as filling materials, fillers, and the like are excluded), an amount of the thermoplastic polymer as the other component is preferably 20 parts by mass or less when the total amount of the plant-derived PE, the plant-derived PA, and the compatibilizer is 100 parts by mass. A lower limit value of the amount of the other component, when contained in the thermoplastic resin composition, is not limited, but can be, for example, 1 part by mass.

The other component that is a thermoplastic polymer include fossil-derived polyolefins having a bio-based carbon content rate of less than 80% according to ISO 16620-2 (polyolefins not included in the plant-derived PE described above). The fossil-derived polyolefins include homopolymers of olefins and/or copolymers of olefins.

The olefins constituting the fossil-derived polyolefins are not particularly limited, and examples thereof include ethylene, propylene, 1-butene, 3-methyl-1-butene, 1-pentene, 3-methyl-1-pentene, 4-methyl-1-pentene, 1-hexene, and 1-octene. These may be used singly, or two or more thereof may be used in combination.

That is, the fossil-derived polyolefins include polyethylene, polypropylene, poly(1-butene), poly(1-hexene), and poly(4-methyl-1-pentene). These polymers may be used singly, or two or more thereof may be used in combination. Further, when two or more of these copolymers are used, both pellets made of a mixed resin and a pellet mixture are included.

Examples of the polyethylene include an ethylene homopolymer and a copolymer of ethylene and another olefin. Examples of the latter include an ethylene-1-butene copolymer, an ethylene-1-hexene copolymer, an ethylene-1-octene copolymer, and an ethylene-4-methyl-1-pentene copolymer. In addition, in the copolymer of ethylene and another olefin, 50% or more of the total number of constitutional units is derived from ethylene.

Examples of the polypropylene include a propylene homopolymer and a copolymer of propylene and another olefin. Examples of the latter include a propylene-ethylene copolymer, a propylene-1-butene copolymer, a propylene-1-hexene copolymer, a propylene-1-octene copolymer, and a propylene-4-methyl-1-pentene copolymer.

Further, the copolymer of propylene and another olefin may be a random copolymer or a block copolymer. Of them, a block copolymer can be used from the viewpoint of excellent impact resistance. In particular, a propylene-ethylene block copolymer in which another olefin is ethylene can be used. The propylene-ethylene block copolymer is a block copolymerized polypropylene having an ethylene block as a dispersed phase. That is, it is a polypropylene resin in which homopolypropylene is used as a continuous phase and a dispersed phase containing a polyethylene is present in the continuous phase. Such a block copolymerized polypropylene having an ethylene block as a dispersed phase is also referred to as, for example, an impact copolymer, a polypropylene impact copolymer, a heterophasic polypropylene, or a heterophasic block polypropylene. This block copolymerized polypropylene is preferred from the viewpoint of excellent impact resistance.

In addition, in the copolymer of propylene and another olefin, 50% or more of the total number of constitutional units is derived from propylene.

The other component that is a thermoplastic polymer include fossil-derived polyamides having a bio-based carbon content rate of less than 80% according to ISO 16620-2 (polyamides not included in the plant-derived PA described above). Examples of the fossil-derived polyamide include polyamide 6, polyamide 66, polyamide 11, polyamide 610, polyamide 612, polyamide 614, polyamide 12, polyamide 6T, polyamide 6I, polyamide 9T, polyamide M5T, polyamide 1010, polyamide 1012, polyamide 10T, polyamide MXD6, polyamide 6T/66, polyamide 6T/6I, polyamide 6T/6I/66, polyamide 6T/2M-5T, and polyamide 9T/2M-8T. These polyamides may be used singly, or two or more thereof may be used in combination. Further, when two or more of these copolymers are used, both pellets made of a mixed resin and a pellet mixture are included.

When the other component is a component which does not act similarly to the plant-derived PE, the plant-derived PA, and the compatibilizer, an amount of the other component is preferably 500 parts by mass or less when the total amount of the plant-derived PE, the plant-derived PA, and the compatibilizer is 100 parts by mass. A lower limit value of the amount of the other component, when contained in the thermoplastic resin composition, is not limited, but can be, for example, 1 part by mass. Examples of such other components include various additives such as a flame retardant, a flame retardant aid, a filling material, a colorant, an antibacterial agent, and an antistatic agent. These may be used singly, or two or more thereof may be used in combination.

[2] Method for Producing Thermoplastic Resin Composition

The method for producing the thermoplastic resin composition of the present invention includes: a melt-kneading step of melt-kneading a melt-kneaded product of the plant-derived PA and the compatibilizer with the plant-derived PE.

The properties and blending of each of the plant-derived PE, the plant-derived PA, and the compatibilizer are as described above.

The melt-kneading step is a step of melt-kneading a melt-kneaded product of the plant-derived PA and the compatibilizer with the plant-derived PE.

The melt-kneaded product used in this case may be a composition in a molten state or a composition in a softened state, or may be solidified by pelletization or the like.

In this melt-kneading step, any melt-kneading apparatus may be used. For example, it is possible to use an extruder (single screw extruder, twin screw kneading extruder, etc.), a kneader, a mixer (high speed flow mixer, paddle mixer, ribbon mixer, etc.) and the like. These apparatuses may be used singly, or may be used in combination of two or more thereof. In addition, when two or more types of apparatuses are used, they may be operated continuously or batchwise. Furthermore, the raw materials may be mixed all at once, or may be mixed by adding and charging in plural separate parts (multistage compounding).

A kneading temperature in the melt-kneading step is not particularly limited, but is preferably 190 to 350°C, more preferably 200 to 300°C, and even more preferably 205 to 260°C.

In the present method, a melt-kneaded product melt-kneaded in advance (a melt-kneaded product of the plant-derived PA and the compatibilizer) is used, and thus kneading is performed when the plant-derived PA and the compatibilizer react with each other. Therefore, it is considered that a reactive group is added to a surface of the plant-derived PA due to the compatibilizer having the reactive group, so that the plant-derived PA in which the compatibilizer is bonded to the surface is formed. The plant-derived PA in which the compatibilizer is bonded to the surface is sheared by further kneading, so that an unreacted surface of the plant-derived PA appears. Then, it is considered that an unreacted compatibilizer reacts further with the unreacted surface. It is considered that the plant-derived PA to which the compatibilizer is bound is sheared in this way, an unreacted surface of the plant-derived PA appears, and a reaction of the unreacted compatibilizer with the unreacted surface is repeated, whereby a smaller reaction product of the plant-derived PA and the compatibilizer can be stably formed without relying on a high shear.

It is considered that, when the amount of the compatibilizer that can be supplied in the above-described process is small, the plant-derived PA to which the compatibilizer is bound is difficult to be reduced in size, and that, when the amount of the compatibilizer that can be supplied is sufficiently large, the plant-derived PA to which the compatibilizer is bound is easily reduced in size.

[3] Molded Body

The molded body of the present invention is characterized by being composed of the thermoplastic resin composition of the present invention described above.

When the thermoplastic resin composition is molded, any known molding method can be used. Specifically, examples of molding methods include injection molding, extrusion molding (sheet extrusion, profile extrusion), T-die molding, blow molding, injection blow molding, inflation molding, hollow molding, vacuum molding, foam molding, compression molding, press molding, stamping molding, transfer molding, and insert molding. These may be used singly, or two or more thereof may be used in combination.

The shape, size, thickness, and the like of the molded body are not particularly limited, and the application of the molded body is not particularly limited. Examples of the molded body include pellets. When the molded body is a pellet, it can be used as a modifier for performing modification (for example, impact resistance improvement, fluidity improvement, and the like) by being added to another resin. The object to be modified is not limited, and examples thereof include polyolefins. As the polyolefin, a plant-derived PE can be used. In addition, a plant-derived polypropylene (plant-derived PP) similar to the plant-derived PE can be used. Furthermore, the fossil derived polyolefin described above can be used as the other component.

In this modification, dry blending can be utilized by utilizing the present molded body. That is, the present molded body is mixed with a pellet of a resin or the like to be modified by dry blending, and then the mixed pellet is molded, whereby a modified molded body (shaped body which is not in a simple pellet shape or the like) can be obtained. In general, at the time of modification, a modified molded body (shaped body which is not in a simple pellet shape or the like) is obtained by pelletizing a melt-kneaded product obtained by melt-kneading them, and molding the obtained modified pellet. However, when the present molded body (modifier) is used, modification can be performed by dry blending without requiring the melt-kneading.

Further, the molded body is used as various articles and the like used for vehicles such as automobiles, railway vehicles (whole vehicles), aircraft fuselages (whole fuselages), ships/hulls (whole hulls), and bicycles (whole bodies).

Among them, examples of the automobile articles include exterior parts, interior parts, engine parts, and electrical parts. Specific examples of the exterior parts for automobiles include roof rail, fender, fender liner, garnish, bumper, door panel, roof panel, hood panel, trunk lid, fuel lid, door mirror stay, spoiler, hood louver, wheel cover, wheel cap, grill apron cover frame, lamp bezel, door handle (pull handle), door molding, rear finisher, wiper, engine under cover, floor under cover, rocker molding, cowl louver, and cowl (motorcycle).

Examples of the interior parts for automobiles include trim parts such as door trim substrates (FR, RR, and BACK), pockets, armrests, switch bases, decorative panels, ornament panels, EAmaterials, speaker grilles, and quarter trim substrates; pillar garnish; cowl side garnish (cowl side trim); sheet parts such as shields, back boards, dynamic dampers, and side airbag peripheral parts; instrument panel parts such as center clusters, registers, center boxes (doors), grab doors, cup holders, and airbag peripheral parts; center console; overhead console; sun visor; deck board (luggage board), undertray; package tray; high mount stop lamp cover; CRS cover; seat-side garnish; scuff plate; room lamp; assist grip; safety belt part; register blade; washer lever; window regulator handle; knob of window regulator handle; and passive light lever.

Examples of the engine parts for automobiles include alternator terminal, alternator connector, IC regulator, potential meter base for light diya, exhaust gas valve, fuel pipe, cooling pipe, brake pipe, wiper pipe, exhaust pipe, intake pipe, hose, tube, air intake nozzle snorkel, intake manifold, fuel pump, engine cooling water joint, carburetor main body, carburetor spacer, exhaust gas sensor, cooling water sensor, oil temperature sensor, brake pad wafer sensor, throttle position sensor, crank shaft position sensor, air flow meter, brake pad wear sensor, brake piston, solenoid bobbin, engine oil filter, ignition device case, and torque control lever.

Examples of the electrical parts for automobiles include various connectors such as battery peripheral parts, thermostats for air conditioners, warm air flow control valves, brush holders for radiator motors, water pump impellers, turbine vanes, wiper motor-related parts, distributors, starter switches, starter relays, wire harnesses for transmissions, window washer nozzles, air conditioner switch substrates, coils for fuel-related electromagnetic valves, wire harness connectors, SMJ connectors, PCB connectors, door grommet connectors, and fuse connectors, horn terminals, electrical part insulating plates, step motor rotors, lamp sockets, lamp reflectors, lamp housings, cleaner cases, filter cases, and power trains.

Furthermore, the molded body is also used as various articles and the like in non-vehicle applications other than the above-described vehicles. That is, examples of the non-vehicle applications include:

industrial materials such as ropes, spunbonds, polishing brushes, industrial brushes, filters, transport containers, trays, trolleys, and other general materials;

electronic components such as connectors, coils, sensors, LED lamps, sockets, resistors, relay cases, small switches, coil bobbins, capacitors, variable condenser cases, optical pickups, oscillators, various terminal boards, transformers, plugs, printed circuit boards, tuners, speakers, microphones, headphones, small motors, small speed change gears, magnetic head bases, power modules, semiconductors, liquid crystal, FDD carriages, FDD chassis, motor brush holders, parabolic antennas, and computer-related parts;

electric equipment such as generators, motors, transformers, current transformers, voltage regulators, rectifiers, inverters, relays, power contacts, switches, breakers, knife switches, multipole pole rods, and electrical parts cabinets;

housings of industrial robots, housings of care robots, housing of drones (flying objects which fly by remote control, flying objects which fly autonomously),

household and office products such as VTR parts, television parts, irons, hair dryers, rice cooker parts, microwave oven parts, acoustic parts, audio and LD parts, CD and DVD parts, lighting parts, refrigerator parts, washing machine parts, air conditioner parts, typewriter and word processor parts, office computer parts, PCs, game machines, tablet terminals, mobile phones, smartphones, telephones and related parts, facsimile parts, copier parts, cleaning and cleaning equipment, and motor parts;

optical and precision instruments such as cameras, watches, microscopes, binoculars, telescopes, and glasses;

daily necessities and daily necessities such as food trays, storage boxes, storage trays, attache cases, suitcases, helmets, water bottles, storage cases such as bottles, toiletries, writing utensils, stationery, book stands, skin care utensils, utensils, tableware, washing utensils, cleaning utensils, clothing hangers, food containers, and opening/closing lids (e.g., glass bottles);

entertainment items such as toys;

machining/general machine parts such as housings of grass cutters, covers, housings of electric tools, covers, and various clips;

sporting goods such as tennis racket strings, ski boards/boards, protectors (baseball, soccer, motor sports), shoes, shoe soles (soles for sports shoes), and outdoor/climbing tools;

furniture-related items such as dress cases, tables, chairs (chairs), shoe boxes, kitchen utensils, toilet utensils, and bathing tools;

residential and civil engineering-related goods such as interior and exterior walls/roofs, heat insulating materials, door/door-related parts, window material-related parts, flooring material-related parts, base isolation/damping parts, shutters, gutters, clean water/waste water-related parts (lifeline-related parts), parking garages, gas/electrical-related parts (lifeline-related parts), civil engineering-related parts, traffic signals, road signs, pylons, center poles, guard rails (guard wires), and equipment for construction work;

medical supplies such as mouthpieces, medical devices, and pharmaceutical containers;

clothing-related items such as shoes; and

agriculture-, forestry-, and fishery-related products such as agricultural machines, agricultural tools, flower pots (planters), fishing tools, aquaculture tools, and forestry tools.

[4] Modifier

The modifier of the present invention is a polyolefin modifier in which the resin to be modified is a polyolefin (provided that polyethylene is excluded). By blending the modifier of the present invention, it is possible to realize modification of improving the impact resistance of polyolefins except polyethylene.

The modifier of the present invention contains a polyethylene ($PE_2$), a polyamide, and a compatibilizer. Among these components, the compatibilizer is a modified elastomer having a reactive group that reacts with the polyamide.

Furthermore, the polyethylene ($PE_2$) has a bio-based carbon content rate of 80% or more according to ISO 16620-2. That is, it is a plant-derived polyethylene (plant-derived PE).

Furthermore, the polyamide has a bio-based carbon content rate of 80% or more according to ISO 16620-2. That is, it is a plant-derived polyamide (plant-derived PA).

<1> Polyethylene $PE_2$

The polyethylene $PE_2$ is basically the same as the plant-derived PE described above in the description about the thermoplastic resin composition, and the "plant-derived PE" in the thermoplastic resin composition can be read as "polyethylene $PE_2$" (hereinafter, the polyethylene is also simply referred to as "plant-derived $PE_2$").

The plant-derived $PE_2$ is a polymer having a structure (methylene chain) in which methylene groups ($-CH_2-$) are linked as a main skeleton. The methylene chain is a constitutional unit derived particularly from ethylene.

Also, the plant-derived $PE_2$ includes a homopolymer of ethylene and a copolymer of ethylene and another olefin. These may be used singly, or two or more thereof may be used in combination. When the plant-derived $PE_2$ is a copolymer, a non-ethylene-derived unit (another olefin-derived unit) preferably occupies 50% or less (further 30% or less, and further 10% or less) of the total number of constitutional units. This is because the lower the proportion of the non-ethylene-derived unit, the higher the bio-based carbon content rate. That is, the plant-derived $PE_2$ is preferably a substantial ethylene homopolymer having a low proportion of the non-ethylene-derived unit (for example, 10% or less).

As another olefin as described above, similar examples indicated with respect to the plant-derived PE described above in the description about the thermoplastic resin composition can be directly applied.

Various properties of the plant-derived $PE_2$ are not limited, but a high density polyethylene having a density of 0.942 $g/cm^3$ or more is preferred. Furthermore, the MFR (230°C/2.16 kg) of the plant-derived $PE_2$ is preferably 35 g/10 min or less. The MFR of the plant-derived $PE_2$ is 35 g/10 min or less (usually, 1 g/10 min or more), so that the resulting modifier can have excellent modification performance. Further, the MFR is preferably 20 g/10 min or less, and more preferably 15 g/10 min or less. A lower limit is not limited, but is preferably 2 g/10 min or more, and more preferably 3 g/10 min or more, from the viewpoint of ease of melt-kneading.

In the present invention, the MFR (230°C/2.16 kg) of the polyethylene is a value as measured according to the standard ISO 1133 or ASTM D1238. Values according to these standards are usually substantially the same.

As described above, the density of the plant-derived $PE_2$ is preferably 0.942 $g/cm^3$ or more, and, further, more preferably 0.950 $g/cm^3$ or more. An upper limit of the density is not limited, but is preferably 0.954 $g/cm^3$ or less.

Achievement of both the MFR and the density described above can be adjusted by linearity, a branching amount, a molecular weight, and the like of the polyethylene.

In the present invention, the density of the polyethylene is a value as measured according to the standard ISO 1183 or ASTM D792. Values according to these standards are usually substantially the same.

Furthermore, the MFR (230°C/2.16 kg) of the plant-derived $PE_2$ is preferably small. Specifically, the MFR is preferably closer to an MFR (230°C/2.16 kg) of a melt-kneaded product obtained from a plant-derived PA and a compatibilizer, which will be described later. That is, it is considered that, as for kneading of the plant-derived PA and the compatibilizer can be promoted by a reaction between them, and the kneading of them is hardly affected by a difference in MFR. On the other hand, in kneading of the plant-derived $PE_2$ and the melt-kneaded product (the melt-kneaded product of the plant-derived PA and the compatibilizer), they are not reacted. Thus, it is considered that the kneading of them is easily affected by a difference in MFR therebetween. Therefore, it is considered that kneadability is improved by bringing the MFR of the plant-derived $PE_2$ and the MFR of the melt-kneaded product close to each other, and that the impact resistance can be improved accordingly.

Specifically, when the MFR (230°C/2.16 kg) of the plant-derived $PE_2$ is $M_{PE2}$ (g/10 min) and the MFR (230°C/2.16 kg) of the melt-kneaded product of the plant-derived PA and the compatibilizer is $M_{PX}$ (g/10 min), a ratio between them, $M_{PE2/PX}$ (= $M_{PE2}/M_{PX}$), is preferably $0.5 \leq M_{PE2/PX} \leq 20$, more preferably $1 \leq M_{PE2/PX} \leq 17$, even more preferably $2 \leq M_{PE2/PX} \leq 13$, and particularly preferably $5 \leq M_{PE2/PX} \leq 10$.

Although a range of $M_{PX}$ is not limited, for example, $0.1 \leq M_{PX}$ (g/10 min) $\leq 10$ can be set, further $0.5 \leq M_{PX}$ (g/10 min) $\leq 5$ can be set, and further $1 \leq M_{PX}$ (g/10 min) $\leq 3$ can be set.

<2> Polyamide

The polyamide used in the modifier is basically the same as the plant-derived PA described above in the description about the thermoplastic resin composition, and is the same as the plant-derived PA described above with respect to the bio-based carbon content rate. Furthermore, the polyamide is the same as the plant-derived PA described above in that it is a polymer having a structure in which hydrocarbon groups are linked via amide bonds as a main skeleton, and similar compounds are exemplified as the monomer. Furthermore, the polyamide is the same as the plant-derived PA described above in that it can be obtained by copolymerization of a diamine and a dicarboxylic acid, and similar compounds can be exemplified as the monomer in this case. Among them, from the viewpoint of a high bio-based carbon content rate, it preferably contains a large amount of plant-derived 1,10-diaminodecane and/or 1,5-diaminopentane as the diamine. Further, from the viewpoint of a high bio-based carbon content rate, it preferably contains a large amount of plant-derived sebacic acid, furandicarboxylic acid, and/or glutaric acid as the dicarboxylic acid. Examples of the plant-derived PA are similar to those in a case of the plant-derived PA described above, and these polyamides may be used singly, or two or more thereof may be used in combination. Further, when two or more of these copolymers are used, both pellets made of a mixed resin and a pellet mixture are included.

In addition, regardless of whether the plant-derived PA is a homopolymer of an amino acid or a lactam or a copolymer of a diamine and a dicarboxylic acid, the plant-derived PA becomes plant-derived due to the fact that a monomer that forms these polymers is derived from a plant raw material. A total amount of the monomer may be a plant-derived monomer, or only a part thereof may be a plant-derived monomer (that is, a fossil-derived monomer may be contained in the other part). That is, as a result, the plant-derived PA has only to have a bio-based carbon content rate of 80% or more.

Although various properties of the plant-derived PA are not limited, it is preferable that the plant-derived PA is a polyamide having a density of 1.15 $g/cm^3$ or less and have an MFR (230°C/2.16 kg) of 50 g/10 min or less. The MFR of the plant-derived PA is 50 g/10 min or less (usually, 1 g/10 min or more), so that the resulting modifier can have excellent modification performance. The MFR is even more preferably 40 g/10 min or less, and more preferably 35 g/10 min or less. A lower limit is not limited, but is preferably 3 g/10 min or more, and more preferably 5 g/10 min or more, from the viewpoint of ease of melt-kneading.

In the present invention, the MFR (230°C/2.16 kg) of the plant-derived PA is a value as measured according to the standard ISO 1133 or ASTM D1238. Values according to these standards are usually substantially the same.

As described above, the density of the plant-derived PA is preferably 1.15 $g/cm^3$ or less, and, further, more preferably 1.08 $g/cm^3$ or less. A lower limit of the density is not limited, but is preferably 0.98 $g/cm^3$ or more.

Achievement of both the MFR and the density can be adjusted by linearity, a branching amount, a molecular weight, and the like of the plant-derived PA.

In the present invention, the density of the plant-derived PA is a value as measured according to the standard ISO 1183 or ASTM D792. Values according to these standards are usually substantially the same.

<3> Compatibilizer

The compatibilizer used in the modifier is basically the same as the compatibilization described above in the description about the thermoplastic resin composition, but is preferably a component having affinity for the plant-derived $PE_2$. In this case, the compatibilizer is a component having a compatibilizing effect on the plant-derived $PE_2$ and the plant-derived PA. That is, the compatibilizer is preferably a compatibilizer for the plant-derived $PE_2$ and the plant-derived PA.

In the present modifier, the compatibilizer may be reacted entirely with the plant-derived PA, or may be reacted only partially therewith.

Furthermore, the reactive group of the modified elastomer is similar to that of the compatibilization described above in the description about the thermoplastic resin composition, the modification amount of the modified elastomer by the reactive group is also similar to that of the compatibilization described above, and examples of the reactive group of the modified elastomer are also similar. Furthermore, the modification amount of the modified elastomer by the reactive group is also similar. Similarly, examples of the modified elastomer include polymers using various monomers capable of introducing a reactive group, oxidative decomposition products of various polymers, and graft polymers of organic acids to various polymers. Examples of the monomer capable of introducing a reactive group are also similar. Furthermore, the same type of skeleton resin of the modified elastomer is employed.

Although various properties of the compatibilizer are not limited, it is preferable that the compatibilizer is a modified elastomer having a density of 0.90 $g/cm^3$ or less and have an MFR (230°C/2.16 kg) of 10 g/10 min or less. The MFR of the compatibilizer is 10 g/10 min or less (usually, 0.5 g/10 min or more), so that the resulting modifier can have excellent modification performance. Further, the MFR is preferably 7 g/10 min or less, and more preferably 5 g/10 min or less. An upper limit is not limited, but is preferably 0.5 g/10 min or more, and more preferably 1.0 g/10 min or more, from the viewpoint of ease of melt-kneading.

In the present invention, the MFR (230°C/2.16 kg) of the compatibilizer is a value as measured according to the standard ISO 1133 or ASTM D1238. Values according to these standards are usually substantially the same.

As described above, the density of the compatibilizer is preferably 0.90 $g/cm^3$ or less, and, further, more preferably 0.89 g/cm$^3$ or less. A lower limit of the density is not limited, but is preferably 0.85 g/cm$^3$ or more.

Achievement of both the MFR and the density can be adjusted by linearity, a branching amount, a molecular weight, a modification amount, and the like of the compatibilizer.

In the present invention, the density of the compatibilizer is a value as measured according to the standard ISO 1183 or ASTM D792. Values according to these standards are usually substantially the same.

The molecular weight of the modified elastomer is not particularly limited, but a weight average molecular weight is preferably 10,000 or more and 500,000 or less, more preferably 35,000 or more and 500,000 or less, and particularly preferably 35,000 or more and 300,000 or less. The weight average molecular weight is measured by a GPC method (in terms of standard polystyrene).

<4> Blending of Each Component

Furthermore, when the total mass proportion of the plant-derived PE$_2$, the plant-derived PA, and the compatibilizer constituting the modifier of the present invention is 100 mass%, a mass proportion of the plant-derived PE$_2$ is R$_{PE2}$ mass%, a mass proportion of the plant-derived PA is R$_{PA}$ mass%, and a mass proportion of the compatibilizer is R$_{CB}$ mass%.

In this case, the mass proportion R$_{CB}$ (mass%) of the compatibilizer is preferably 1 to 70 mass%, more preferably 2 to 60 mass%, even more preferably 2 to 50 mass%, still even more preferably 3 to 40 mass%, still even more preferably 3 to 35 mass%, and still even more preferably 4 to 30 mass%.

In addition, a ratio (R$_{PE2}$/R$_{PA}$) of the mass proportion R$_{PE2}$ of the plant-derived PE$_2$ to the mass proportion R$_{PA}$ of the plant-derived PA is preferably 0.3 to 3.5. Further, the ratio (R$_{PE2}$/R$_{PA}$) can be 0.4 to 2.0, can be 0.35 to 2.00, can be 0.40 to 1.50, and can be 0.45 to 1.20.

On the other hand, in a case where the resin to be modified is a polypropylene (particularly, a block polypropylene), the modifier of the present invention tends to provide excellent impact resistance while increasing the total amount of polyolefins in the obtained modified resin composition when R$_{PE2}$ ≥ R$_{PA}$, as compared with when R$_{PE2}$ < R$_{PA}$. That is, the polyamide has higher impact resistance than the polyolefin, excellent impact resistance can be usually obtained by increasing the blending proportion of the polyamide. However, in the modifier of the present invention, a modifier containing a small amount of polyolefin has more excellent impact resistance performance, as compared with a modifier containing a large amount of polyamide. More specifically, the ratio (R$_{PE2}$/R$_{PA}$) is preferably 1 to 3.5, more preferably 1.0 to 3.3, even more preferably 1.2 to 3.0, still even more preferably 1.5 to 2.5, and still even more preferably 1.8 to 2.3. This ratio (R$_{PE}$/R$_{PA}$) is particularly effective when the mass proportion R$_{CB}$ of the compatibilizer is 30 mass% or less.

In addition, the mass proportion R$_{PE2}$ (mass%) of the plant-derived PE$_2$ is preferably 10 to 90 mass%, more preferably 13 to 85 mass%, even more preferably 17 to 80 mass%, still even more preferably 20 to 75 mass%, still even more preferably 23 to 70 mass%, and still even more preferably 25 to 65 mass%.

Furthermore, the total proportion R$_{PA+CB}$ (mass%) of the plant-derived PA and the compatibilizer is preferably 10 to 90 mass%, more preferably 15 to 87 mass%, even more preferably 20 to 83 mass%, still even more preferably 25 to 80 mass%, still even more preferably 30 to 77 mass%, and still even more preferably 35 to 75 mass%.

In addition, the mass proportion R$_{PA}$ (mass%) of the plant-derived PA is preferably 1 to 80 mass%, more preferably 3 to 75 mass%, even more preferably 5 to 70 mass%, still even more preferably 10 to 75 mass%, still even more preferably 15 to 70 mass%, and still even more preferably 20 to 65 mass%.

Further, when the total mass proportion of the plant-derived PA and the compatibilizer is 100 mass%, a mass proportion of the compatibilizer is preferably 3 to 70 mass%, more preferably 4 to 65 mass%, even more preferably 5 to 60 mass%, still even more preferably 6 to 55 mass%, still even more preferably 7 to 45 mass%, and still even more preferably 8 to 40 mass%.

In particular, in a case of obtaining a modifier capable of exerting a high impact resistance-imparting effect in a range in which the mass proportion R$_{PA}$ of the plant-derived PA is lower than the mass proportion R$_{PE2}$ of the plant-derived PE$_2$ (that is, R$_{PA}$ < R$_{PE2}$), R$_{PE2}$ : R$_{PA}$ : R$_{CB}$ is preferably 50 to 80 mass% : 20 to 45 mass% : 1 to 25 mass%, more preferably 52 to 70 mass% : 24 to 40 mass% : 3 to 18 mass%, and particularly preferably 55 to 65 mass% : 27 to 35 mass% : 6 to 14 mass%. In the above ranges, the Charpy impact strength of polyolefins (particularly, a polypropylene) can be improved 3 times or more, and further improved 4 times or more by the modification.

Although the fluidity of the modifier of the present invention is not limited, the density is 0.93 to 1.00 g/cm$^3$, and the MFR (230°C/2.16 kg) can be set to 3 g/10 min or more (usually, 30 g/10 min or less). The MFR can be further set to 6 g/10 min or more, further set to 12 g/10 min or more, and further set to 17 g/10 min or more. An upper limit value is not limited, but can be 27 g/10 min or less. In particular, the MFR can be set to 3 to 30 g/10 min, further to 3 to 27 g/10 min, further to 3 to 17 g/10 min, and further to 3 to 12 g/10 min.

In the present invention, the MFR (230°C/2.16 kg) of the compatibilizer is a value as measured according to the standard ISO 1133 or ASTM D1238. Values according to these standards are usually substantially the same.

The phase structure of the modifier of the present invention is not limited, and may similarly have any of the specific phase structures (1) to (3) described above in the description about the thermoplastic resin composition (provided that the "plant-derived PE" is read as "plant-derived PE$_2$"). Similarly, in particular, when the phase structures (1) and (2) described above are exhibited, excellent impact resistance properties can be obtained by the phase structure having the finely dispersed phase (B$_2$). Similarly, in a case where the thermoplastic resin composition has the co-continuous structure (3), excellent impact resistance properties can be obtained.

In a case where the modifier has any of the phase structures described above, the size of the dispersed phase contained in the continuous phase is not limited, and the above description in the description about the thermoplastic resin composition can be applied as it is.

When the modifier has the dispersed phase in the dispersed phase, the size of the finely dispersed phase contained in the dispersed phase is not limited, and the above description in the description about the thermoplastic resin composition can be applied as it is.

<5> Production of modifier

The modifier of the present invention may be produced in any way, and can be obtained by melt-kneading a melt-kneaded product of the plant-derived PA and the modified elastomer with the plant-derived PE$_2$. That is, the modifier of the present invention can be obtained by a production method including a melt-kneading step of melt-kneading a melt-kneaded product of the plant-derived PA and the compatibilizer with the plant-derived PE$_2$.

The melt-kneaded product of the plant-derived PA and the compatibilizer may be a composition in a molten state or a composition in a softened state, or may be solidified by pelletization or the like.

Also, in this melt-kneading step, any melt-kneading apparatus may be used. For example, it is possible to use an extruder (single screw extruder, twin screw kneading extruder, etc.), a kneader, a mixer (high speed flow mixer, paddle mixer, ribbon mixer, etc.) and the like. These apparatuses may be used singly, or may be used in combination of two or more thereof. In addition, when two or more types of apparatuses are used, they may be operated continuously or batchwise. Furthermore, the raw materials may be mixed all at once, or may be mixed by adding and charging in plural separate parts (multistage compounding).

A kneading temperature in the melt-kneading step is not particularly limited, but is preferably 190 to 350°C, more preferably 200 to 300°C, and even more preferably 205 to 260°C.

In the above method, a melt-kneaded product is used. When this melt-kneaded product is obtained, kneading is performed when the plant-derived PA reacts with the compatibilizer. Therefore, it is considered that a reactive group is added to a surface of the plant-derived PA due to the compatibilizer having the reactive group, so that the plant-derived PA in which the compatibilizer is bonded to the surface is formed. The plant-derived PA in which the compatibilizer is bonded to the surface is sheared by further kneading, so that an unreacted surface of the plant-derived PA appears. Then, it is considered that an unreacted compatibilizer reacts further with the unreacted surface. It is considered that the plant-derived PA to which the compatibilizer is bound is sheared in this way, an unreacted surface of the plant-derived PA appears, and a reaction of the unreacted compatibilizer with the unreacted surface is repeated, whereby a smaller reaction product of the plant-derived PA and the compatibilizer can be stably formed without relying on a high shear.

It is considered that, when the amount of the compatibilizer that can be supplied in the above-described process is small, the plant-derived PA to which the compatibilizer is bound is difficult to be reduced in size, and that, when the amount of the compatibilizer that can be supplied is sufficiently large, the plant-derived PA to which the compatibilizer is bound is easily reduced in size.

<6> Resin to Be Modified (polyolefin except polyethylene)

The resin to be modified by the modifier of the present invention is a polyolefin except polyethylene. The polyethylene means all polyethylenes regardless of raw materials from which they are derived. That is, it may be a fossil-derived polyethylene, a plant-derived polyethylene, or a polyethylene derived from both of them.

The polyolefin may be a fossil-derived polyolefin having a bio-based carbon content rate of less than 80% according to ISO 16620-2, or a plant-derived polyolefin having a bio-based carbon content rate of 80% or more.

The olefin constituting the polyolefin is not limited, and examples thereof include ethylene, an olefin having 3 carbon atoms (propylene), an olefin having 4 carbon atoms (e.g., 1-butene), an olefin having 5 carbon atoms (3-methyl-1 butene, 1-pentene, etc.), an olefin having 6 carbon atoms (3-methyl-1 pentene, 4-methyl-1 pentene, 1-hexene, etc.), and an olefin having 8 carbon atoms (e.g., 1-octene). These may be used singly, or two or more thereof may be used in combination.

That is, examples of the polyolefins include polypropylene, poly(1-butene), poly(1-hexene), and poly(4-methyl-1-pentene). These polymers may be used singly, or two or more thereof may be used in combination. Further, when two or more of these copolymers are used, both pellets made of a mixed resin and a pellet mixture are included.

Among those described above, examples of the polypropylene include a propylene homopolymer and a copolymer of propylene and another olefin. Examples of the latter include a propylene-ethylene copolymer, a propylene-1-butene copolymer, a propylene-1-hexene copolymer, a propylene-1-octene copolymer, and a propylene-4-methyl-1-pentene copolymer.

Further, the copolymer of propylene and another olefin may be a random copolymer or a block polypropylene (block copolymer). Of them, a block polypropylene can be used from the viewpoint of excellent impact resistance. In particular, a propylene-ethylene block copolymer in which another olefin is ethylene can be used. The propylene-ethylene block copolymer is a block copolymerized polypropylene having an ethylene block as a dispersed phase. That is, it is a polypropylene resin in which homopolypropylene is used as a continuous phase and a dispersed phase containing a polyethylene is present in the continuous phase. Such a block copolymerized polypropylene having an ethylene block as a dispersed phase is also referred to as, for example, an impact copolymer, a polypropylene impact copolymer, a heterophasic polypropylene, or a heterophasic block polypropylene. This block polypropylene is preferred from the viewpoint of excellent impact resistance.

In addition, in the copolymer of propylene and another olefin, 50% or more of the total number of constitutional units is derived from propylene.

Various properties of the polyolefin are not limited. For example, in a case of polypropylene, a block polypropylene having a density of 0.85 to 0.95 g/cm$^3$ (furthermore, a density of 0.88 to 0.92 g/cm$^3$) can be used. The MFR (230°C/2.16 kg) of the polypropylene is not limited, but is preferably, for example, 15 g/10 min or more. The MFR of the polypropylene is 15 g/10 min or more (usually, 100 g/10 min or less), so that the molded body can obtain more excellent impact resistance properties. Further, the MFR is preferably 20 g/10 min or more, and more preferably 25 g/10 min or more. An upper limit is not limited, but is preferably 80 g/10 min or less, and more preferably 50 g/10 min or less, from the viewpoint of ease of melt-kneading.

In the present invention, the MFR (230°C/2.16 kg) of the polyolefin is a value as measured according to the standard ISO 1133 or ASTM D1238. Values according to these standards are usually substantially the same. Achievement of both the MFR and the density described above can be adjusted by linearity, a branching amount, a molecular weight, and the like of the polyolefin.

<7> Use of Modifier as Carrier for Additive

The modifier of the present invention can be blended for the purpose of improving the impact resistance of the resin to be modified, and can also be used as a carrier for adding an additive to the resin to be modified. In this case, the additive can be added to the obtained molded body simultaneously with the improvement (modification) in impact resistance.

In this case, the modifier of the present invention can be rephrased as a carrier for adding an additive to a resin to be added which is a polyolefin (provided that polyethylene is excluded),

the carrier containing an additive, a polyethylene (PE$_2$), a polyamide, and a compatibilizer,
wherein the compatibilizer is a modified elastomer having a reactive group that reacts with the polyamide, and
wherein the polyethylene (PE$_2$) and the polyamide have a bio-based carbon content rate of 80% or more according to ISO 16620-2.

The type of additive is not limited, and examples thereof include a flame retardant, a flame retardant aid, a filling material, a colorant, an antibacterial agent, and an antistatic agent. These may be used singly, or two or more thereof may be used in combination.

When the modifier of the present invention is used as a carrier for an additive, for example, 500 parts by mass or less of the additive can be blended when the total amount of the plant-derived PE$_2$, the plant-derived PA, and the compatibilizer is 100 parts by mass. A lower limit value of an amount of the additive contained in the carrier, but can be, for example, 1 part by mass.

[5] Method for Producing Molded Body

The method for producing a molded body of the present invention is characterized by including a molding step of molding a raw material obtained by dry-blending a resin to be modified with the modifier of the present invention described above. That is, the present method for producing a molded body can be rephrased as a modification method.

In this modification, dry blending can be utilized. Specifically, a modified molded body (for example, shaped body) can be obtained by mixing the modifier with raw material particles (pellets, granular materials, etc.) of a polyolefin (provided that polyethylene is excluded), which is a resin to be modified, by dry blending, and then molding the mixed particles. In general, at the time of modification, a modified molded body (for example, shaped body) is obtained by pelletizing a melt-kneaded product obtained by melt-kneading them and molding the obtained modified pellet. However, the present method can provide an excellent modification effect through dry blending, without requiring the melt-kneading. That is, according to the present method, it is possible to easily obtain a polyolefin-based molded body having excellent impact resistance while realizing a reduction in environmental load through a small number of steps without undergoing a preliminary kneading step.

An amount of the modifier used in the present method is not limited, but the modifier can be used so as to constitute 30 to 70 mass% when a total amount of the resin to be modified and the modifier is 100 mass%. Furthermore, the modifier is preferably used so as to constitute 35 to 65 mass%, and more preferably used so as to constitute 40 to 60 mass%.

In particular, in the method for producing a molded body of the present invention, a molded body having a high polyolefin proportion and excellent impact resistance can be obtained by using a block polypropylene as the resin to be modified and using a modifier satisfying $R_{PE2} \geq R_{PA}$. Furthermore, in a range in which the mass proportion $R_{CB}$ of the compatibilizer is 30 mass% or less, a modifier having a ratio ($R_{PE2}/R_{PA}$) of 1 to 3.5, further 1.0 to 3.3, further 1.2 to 3.0, further 1.5 to 2.5, or further 1.8 to 23 is used, so that a molded body having a higher polyolefin proportion and excellent impact resistance can be obtained. In this case, as described above, when the total amount of the resin to be modified and the modifier is 100 mass%, the modifier is used so as to constitute 30 to 70 mass%, whereby a molded body having a high polyolefin proportion and excellent impact resistance can be obtained. Furthermore, as described above, the modifier is preferably used so as to constitute 35 to 65 mass%, and more preferably used so as to constitute 40 to 60 mass%.

At the time of molding, any known molding method can be used. Specifically, examples of molding methods include injection molding, extrusion molding (sheet extrusion, profile extrusion), T-die molding, blow molding, injection blow molding, inflation molding, hollow molding, vacuum molding, foam molding, compression molding, press molding, stamping molding, transfer molding, and insert molding. These may be used singly, or two or more thereof may be used in combination.

In addition, the shape, size, thickness, and the like of the molded body are not particularly limited, and the application thereof is not particularly limited. The above description in the description about the molded body can be applied as it is.

EXAMPLES

Hereinafter, the present invention will be specifically described by way of examples.

<<Example 1>>

[1] Each Raw Material Component

(1) Plant-derived PE

As the plant-derived PE, the following two polyethylenes were prepared.

PE-1: HDPE (product name "SHA7260" manufactured by Braskem S.A.), density: 0.955 g/cm$^3$, MFR (230°C/2.16 kg): 32 g/10 min, bio-based carbon content rate: 94% or more
PE-2: HDPE (product name "SHC7260" manufactured by Braskem S.A.), density: 0.953 g/cm$^3$, MFR (230°C/2.16 kg): 12 g/10 min, bio-based carbon content rate: 94% or more

(2) Plant-derived PA

As the plant-derived PA, the following polyamide was prepared.

PA: PA11 (product name "Rilsan BMN O" manufactured by Arkema S.A.), density: 1.03 g/cm$^3$, MFR (230°C/2.16 kg): 32 g/10 min, bio-based carbon content rate: 99% or more

(3) Compatibilizer

As the compatibilizer, the following ethylene-1-butene copolymer was prepared.

Compatibilizer: maleic anhydride-modified EBR (product name "TAFMER MH7020" manufactured by Mitsui Chemicals, Inc.), density: 0.866 g/cm$^3$, MFR (230°C/2.16 kg): 1.5 g/10 min

[2] Preparation of Melt-Kneaded Product

The plant-derived PA and the compatibilizer were dry-blended, and the resultant mixture was then charged into a twin-screw melt-kneading extruder (manufactured by Plastic Engineering Laboratory Co., Ltd., screw diameter: 30 mm, L/D = 42), and melt-kneaded under conditions: a kneading temperature of 210°C, an extrusion speed of 3.0 kg/hr, and a screw rotation speed of 200 rpm, whereby a pellet of a melt-kneaded product was obtained through a pelletizer. The MFR (230°C/2.16 kg) of the obtained melt-kneaded product was 1.5 g/10 min.

[3] Preparation of Thermoplastic Resin Composition

The melt mixture obtained in the above [2] and the plant-derived PE were dry-blended, and the resultant mixture was then charged into a twin-screw melt-kneading extruder (manufactured by Plastic Engineering Laboratory Co., Ltd., screw diameter: 30 mm, L/D = 42), and mixed under conditions: a kneading temperature of 210°C, an extrusion speed of 3.0 kg/hr, and a screw rotation speed of 200 rpm, whereby pellets of Experimental Examples 1-1 to 1-8 were obtained through a pelletizer.

[4] Preparation of Molded Body for Evaluation

(1) Molded bodies for evaluation of Experimental Examples 1-1 to 1-8

Each of the thermoplastic resin compositions of Experimental Examples 1-1 to 1-8 obtained in the above [3] was charged into a hopper of an injection molding machine (100 ton injection molding machine), and a molded body for physical property measurement was injection molded under injection conditions: a set temperature of 210°C and a mold temperature of 60°C.

[Table 1]

| Experimental Example | | 1-1 | 1-2 | 1-3 | 1-4 | 1-5 | 1-6 | 1-7 | 1-8 |
|---|---|---|---|---|---|---|---|---|---|
| Plant-derived | PE-1 | 55.0 | | | | − | | | |
| | PE-2 | − | 55.0 | 32.5 | 60.0 | 40.0 | 30.0 | 50.0 | 60.0 |
| | PA | 25.0 | 25.0 | 42.5 | 25.0 | 45.0 | 60.0 | 45.0 | 30.0 |
| Compatibilizer | | 20.0 | 20.0 | 25.0 | 15.0 | 15.0 | 10.0 | 5.0 | 10.0 |
| Density (g/cm$^3$) | | 0.952 | 0.954 | 0.964 | 0.960 | 0.973 | 0.986 | 0.943 | 0.943 |
| MFR (g/10分) | | 5.24 | 1.86 | 3.35 | 2.96 | 6.88 | 22.83 | 15.7 | 4.90 |
| Charpy impact strength (kJ/m$^2$) | | 70.8 | 75.1 | 84.0 | 77.0 | 83.0 | 80.0 | 20.0 | 78.0 |
| Tensil properties | Yield stress (MPa) | 15 | 15 | 17 | 17 | 22 | 26 | 25 | 21 |
| | Elongation at break (%) | >500 | >500 | 377 | 464 | 487 | 393 | 324 | 295 |
| | Elastic modulus (MPa) | 431 | 454 | 496 | 633 | 794 | 985 | 1057 | 768 |

[5] Evaluation of Molded Body for Evaluation

(1) Measurement of Density

The densities of each of the thermoplastic resin compositions of Experimental Examples 1-1 to 1-8 obtained in the above [4] and each of the raw material components were measured in accordance with ISO 1183. The results are shown in Table 1 and [1].

Test temperature: 23°C
Drying conditions: vacuum drying 80°C $\times$ 8 hours or more

(2) Measurement of MFR

The MFRs of each of the thermoplastic resin compositions of Experimental Examples 1-1 to 1-8 obtained in the above [4] and each of the raw material components (230°C/2.16 kg) were measured in accordance with ISO 1133. The results are shown in Table 1 and [1].
Test apparatus: Melt indexer (model "F-F01" manufactured by Toyo Seiki Seisaku-sho, Ltd.)

Test temperature: 230°C
Test load: 2.16 kgf
Drying conditions: vacuum drying 80°C $\times$ 8 hours or more

(3) Measurement of Charpy Impact Strength

Charpy impact strength (test temperature: 23°C) was measured according to ISO 179 by using each of the molded bodies for evaluation of Experimental Examples 1-1 to 1-8 obtained in the above [4]. The results are shown in Table 1.
In the measurement of the Charpy impact strength, a test piece having a notch (type A) was used, and the impact was measured by the edgewise test method at a temperature of 23°C.

(4) Tensile Test

Each of the molded bodies for evaluation of Experimental Examples 1-1 to 1-8 obtained in the above [4] was used to perform a tensile test in accordance with ISO 527-1. As a result, the obtained yield stress, elongation at break, and elastic modulus are shown in Table 1.
Test apparatus: Autograph 50 kN (model "AGS-X " manufactured by Shimadzu Corporation)

Test temperature: 23°C
Test piece shape: ISO multipurpose test piece
Tensile rate (elastic modulus measurement): 1 mm/min
Tensile rate (strength and elongation measurement): 50 mm/min
Drying conditions: vacuum drying 23°C $\times$ 24 hours or more

[6] Morphology

The phase structure of each thermoplastic resin composition was observed using each of test pieces of Experimental Example 1-6 (see Fig. 1 to Fig. 3) and Experimental Example 1-8 (see Fig. 4 to Fig. 6). This phase structure was obtained by observing, with a field emission scanning electron microscope (FE-SEM), a treated surface of each test piece subj ected to oxygen plasma etching treatment (oxygen plasma etching treatment at 100 W for 1 minute) and further subjected to osmium coating treatment.
Among the obtained SEM images, an image obtained by magnifying the surface of Experimental Example 1-6 5,000 times is shown in Fig. 1, an image obtained by magnifying the surface of Experimental Example 1-6 10,000 times is shown in Fig. 2, and an image obtained by magnifying the surface of Experimental Example 1-6 20,000 times is shown in Fig. 3. Further, an image obtained by magnifying the surface of Experimental Example 1-8 5,000 times is shown in Fig. 4, an image obtained by magnifying the surface of Experimental Example 1-8 10,000 times is shown in Fig. 5, and an image obtained by magnifying the surface of Experimental Example 1-8 20,000 times is shown in Fig. 6.

[7] Effects of Example 1

From the results in Table 1, Experimental Examples 1-1 to 1-8 can each give a thermoplastic resin composition having a density reduced to 1.00 g/cm$^3$ and excellent impact resistance of a Charpy impact strength of 20 to 84 kJ/m$^2$ while using a polyethylene and a polyamide having a bio-based carbon content rate of 80% or more in an amount of 75 mass% or more based on 100 mass% of the total thermoplastic resin composition. Furthermore, the MFR of the thermoplastic resin composition can be controlled in a wide range of 1.86 to 22.83 g/10 min, and, in particular, a thermoplastic resin composition having high fluidity of 10 g/10 min or more can be obtained. That is, there can be obtained a thermoplastic resin composition capable of achieving both high impact resistance and high fluidity using three components, i.e., a polyolefin, a polyamide, and a compatibilizer, while realizing a reduction in environmental load, a method for producing the same, and a molded body using the thermoplastic resin composition.

From the results in Figs. 1 to 3, Experimental Example 1-6 can give a phase structure in which the plant-derived PA is used as the continuous phase A, the plant-derived PE is used as the dispersed phase B, and, further, the continuous phase $B_1$ in the dispersed phase and the finely dispersed phase $B_2$ are included in the dispersed phase B. Further, from the results in Figs. 4 to 6, Experimental Example 1-8 can give a phase structure in which the plant-derived PE is used as the continuous phase A, the plant-derived PA is used as the dispersed phase B, and, further, the continuous phase $B_1$ in the dispersed phase and the finely dispersed phase $B_2$ are included in the dispersed phase B.

<<Example 2>>

[1] Each Raw Material Component

(1) Plant-derived $PE_2$
As the plant-derived $PE_2$, the same HDPE as PE-2 in <<Example 1>> was prepared.
(2) Plant-derived PA
As the plant-derived PA, the same PA11 as PA in <<Example 1>> was prepared.
(3) Compatibilizer
As the compatibilizer, the compatibilizer of <<Example 1>> and the maleic anhydride-modified EBR was prepared.
(4) Resin to Be Modified

As the resin to be modified, the following non-plant-derived PP and the following plant-derived PE were prepared.
Non-plant-derived PP: block polypropylene (product name "J817U" manufactured by Prime Polymer Co., Ltd.), density: 0.90 g/cm$^3$, MFR (230°C/2.16 kg): 31 g/10 min, bio-based carbon content rate: 0%
Plant-derived PE: the same HDPE as PE-1 in <<Example 1» was prepared.

[2] Preparation of Melt-Kneaded Product

The plant-derived PA and the compatibilizer were dry-blended at a blending ratio (on a mass basis) of 6 : 1 or 3 : 1, and the resultant mixture was then charged into a twin-screw melt-kneading extruder (manufactured by Plastic Engineering Laboratory Co., Ltd., screw diameter: 30 mm, L/D = 42), and melt-kneaded under conditions: a kneading temperature of 210°C, an extrusion speed of 3.0 kg/hr, and a screw rotation speed of 200 rpm, whereby a pellet of a melt-kneaded product was obtained through a pelletizer. As for the MFR of the obtained melt-kneaded product (230°C/2.16 kg), the MFR of the melt kneaded product A having a blending ratio of the plant-derived PA to the compatibilizer ratio of 6 : 1 was 5.9 g/10 min, and the MFR of the melt kneaded product B having a blending ratio of the plant-derived PA to the compatibilizer of 3 : 1 was 0.98 g/10 min.

[3] Preparation of Modifier

(1) Preparation of Modifiers of Experimental Example 2-1 and Experimental Example 2-9

The melt mixture A obtained in the above [2] and the plant-derived $PE_2$ were dry-blended (on a mass basis) at a blending ratio of 7 : 3, and the resultant mixture was then charged into a twin-screw melt-kneading extruder (manufactured by Plastic Engineering Laboratory Co., Ltd., screw diameter: 30 mm, L/D = 42), and mixed under conditions: a kneading temperature of 210°C, an extrusion speed of 3.0 kg/hr, and a screw rotation speed of 200 rpm, whereby modifiers (pellets) of Experimental Example 2-1 and Experimental Example 2-9 were obtained through a pelletizer. The obtained modifier had a density of 0.99 g/cm$^3$ and an MFR (230°C/2.16 kg) of 22.8 g/10 min.

(2) Preparation of Modifiers of Experimental Example 2-5 and Experimental Example 2-13

The melt mixture B obtained in the above [2] and the plant-derived $PE_2$ were dry-blended (on a mass basis) at a blending ratio of 4 : 6, and the resultant mixture was then charged into a twin-screw melt-kneading extruder (manufactured by Plastic Engineering Laboratory Co., Ltd., screw diameter: 30 mm, L/D = 42), and mixed under conditions: a kneading temperature of 210°C, an extrusion speed of 3.0 kg/hr, and a screw rotation speed of 200 rpm, whereby modifiers (pellets) of Experimental Example 2-5 and Experimental Example 2-13 were obtained through a pelletizer. The obtained modifier had a density of 0.94 g/cm$^3$ and an MFR (230°C/2.16 kg) of 4.9 g/10 min.

[4] Production of Molded Body

(1) Production of Molded bodies of Experimental Examples 2-2 and 2-3

The modifier of Experimental Example 2-1 obtained in the above [3] and a non-plant-derived PP (block polypropylene) as the resin to be modified were dry-blended at a blending ratio of 1 : 1 (Experimental Example 2-2) and a blending ratio of 1 : 4 (Experimental Example 2-3), and then the obtained dry blend raw material was charged into a hopper of an injection molding machine (100 ton injection molding machine), and injection-molded under injection conditions: a set temperature of 210°C and a mold temperature of 60°C to obtain molded bodies (molded bodies for evaluation) of Experimental Examples 2-2 and 2-3.

(2) Production of Molded Bodies of Experimental Examples 2-6 and 2-7

The modifier of Experimental Example 2-5 obtained in the above [3] and a non-plant-derived PP (block polypropylene) as the resin to be modified were dry-blended at a blending ratio of 1 : 1 (Experimental Example 2-6) and a blending ratio of 1 : 4 (Experimental Example 2-7), and then the obtained dry blend raw material was charged into a hopper of an injection molding machine (100 ton injection molding machine), and injection-molded under injection conditions: a set temperature of 210°C and a mold temperature of 60°C to obtain molded bodies (molded bodies for evaluation) of Experimental Examples 2-6 and 2-7.

(3) Molded Bodies of Experimental Examples 2-1 and 2-5

The modifiers of Experimental Example 2-1 and Experimental Example 2-5 obtained in the above [3] were charged into a hopper of an injection molding machine (100 ton injection molding machine) and injection-molded under injection conditions: a set temperature of 210°C and a mold temperature of 60°C to obtain molded bodies (molded bodies for evaluation) of Experimental Examples 2-1 and 2-5. The molded bodies of Experimental Example 2-1 and Experimental Example 2-9 are the same. Furthermore, the molded bodies of Experimental Example 2-5 and Experimental Example 2-13 are the same.

(4) Molded Bodies of Experimental Examples 2-4 and 2-8

The non-plant-derived PP prepared in the above [1] (4) was charged into a hopper of an injection molding machine (100 ton injection molding machine) and injection-molded under injection conditions: a set temperature of 210°C and a mold temperature of 60°C to obtain molded bodies (molded bodies for evaluation) of Experimental Examples 2-4 and 2-8. The molded bodies of Experimental Example 2-4 and Experimental Example 2-8 are the same.

[Table 2]

| Experimental Example | | 2-1 | 2-2 | 2-3 | 2-4 | 2-5 | 2-6 | 2-7 | 2-8 |
|---|---|---|---|---|---|---|---|---|---|
| Non-plant-derived PP | | 0 | 50 | 80 | 100 | 0 | 50 | 80 | 100 |
| Modifier | | 100 | 50 | 20 | 0 | 100 | 50 | 20 | 0 |
| | Plant-derived PE$_2$ | 30 | 15 | 6 | 0 | 60 | 30 | 12 | 0 |
| | Plant-derived PA | 60 | 30 | 12 | 0 | 30 | 15 | 6 | 0 |
| | Compatibilizer | 10 | 5 | 2 | 0 | 10 | 5 | 2 | 0 |
| Charpy impact strength (kJ/m$^2$) | | 80 | 71 | 15 | 15 | 77 | 71 | 18 | 15 |
| Impact resistance factor | | - | 4.7 | 1.0 | 1.0 | - | 4.7 | 1.2 | 1.0 |
| Total polyolefin amount | | 30 | 65 | 86 | 100 | 60 | 80 | 92 | 100 |

(5) Molded Bodies of Experimental Examples 2-10 and 2-11

The modifier of Experimental Example 2-9 obtained in the above [3] and the plant-derived PE as the resin to be modified were dry-blended at a blending ratio of 1 : 1 (Experimental Example 2-10) and a blending ratio of 1 : 4 (Experimental Example 2-11), and then the obtained dry blend raw material was charged into a hopper of an injection molding machine (100 ton injection molding machine), and injection-molded under injection conditions: a set temperature of 210°C and a mold temperature of 60°C to obtain molded bodies (molded bodies for evaluation) of Experimental Examples 2-10 and 2-11.

(6) Molded Bodies of Experimental Examples 2-14 and 2-15

The modifier of Experimental Example 2-13 obtained in the above [3] and the plant-derived PE as the resin to be modified were dry-blended at a blending ratio of 1 : 1 (Experimental Example 2-14) and a blending ratio of 1 : 4 (Experimental Example 2-15), and then the obtained dry blend raw material was charged into a hopper of an injection molding machine (100 ton injection molding machine), and injection-molded under injection conditions: a set temperature of 210°C and a mold temperature of 60°C to obtain molded bodies (molded bodies for evaluation) of Experimental Examples 2-14 and 2-15.

(7) Molded Bodies of Experimental Example 2-9 and Experimental Example 2-13

The modifiers of Experimental Example 2-9 and Experimental Example 2-13 obtained in the above [3] were charged into a hopper of an injection molding machine (100 ton injection molding machine) and injection-molded under injection conditions: a set temperature of 210°C and a mold temperature of 60°C to obtain molded bodies (molded bodies for evaluation) of Experimental Example 2-9 and Experimental Example 2-13. The molded bodies of Experimental Example 2-9 and Experimental Example 2-1 are the same. Furthermore, the molded bodies of Experimental Example 2-13 and Experimental Example 2-5 are the same.

(8) Molded Bodies of Experimental Example 2-12 and Experimental Example 2-16

The plant-derived PE prepared in the above [1] (4) was charged into a hopper of an injection molding machine (100 ton injection molding machine) and injection-molded under injection conditions: a set temperature of 210°C and a mold temperature of 60°C to mold molded bodies (molded bodies for evaluation) of Experimental Example 2-12 and Experimental Example 2-16. The molded bodies of Experimental Example 2-12 and Experimental Example 2-16 are the same.

[Table 3]

| Experimental Example | | 2-9 | 2-10 | 2-11 | 2-12 | 2-13 | 2-14 | 2-15 | 2-16 |
|---|---|---|---|---|---|---|---|---|---|
| Plant-derived PE | | 0 | 50 | 80 | 100 | 0 | 50 | 80 | 100 |
| Modifier | | 100 | 50 | 20 | 0 | 100 | 50 | 20 | 0 |
| | Plant-derived PE$_2$ | 30 | 15 | 6 | 0 | 60 | 30 | 12 | 0 |
| | Plant-derived PA | 60 | 30 | 12 | 0 | 30 | 15 | 6 | 0 |
| | Compatibilizer | 10 | 5 | 2 | 0 | 10 | 5 | 2 | 0 |
| Charpy impact strength (kJ/m$^2$) | | 80 | 13 | 6 | 6 | 77 | 23 | 5 | 6 |
| Impact resistance factor | | - | 2.2 | 1.0 | 1.0 | - | 3.8 | 0.8 | 1.0 |
| Total polyolefin amount | | 30 | 65 | 86 | 100 | 60 | 80 | 92 | 100 |

[5] Evaluation of Molded Body for Evaluation

(1) Measurement of Density

The density was measured according to ISO 1183.

Test temperature: 23°C
Drying conditions: vacuum drying 80°C × 8 hours or more

(2) Measurement of MFR

The MFR (230°C/2.16 kg) was measured according to ISO 1133.
Test apparatus: Melt indexer (model "F-F01" manufactured by Toyo Seiki Seisaku-sho, Ltd.)
Test temperature: 230°C
Test load: 2.16 kgf
Drying conditions: vacuum drying 80°C × 8 hours or more

(3) Measurement of Charpy Impact Strength

Charpy impact strength (test temperature: 23°C) was measured according to ISO 179 by using each of the molded bodies for evaluation of Experimental Examples 2-1 to 2-16 obtained in the above [4]. The results are shown in Tables 2 and 3. In the measurement of the Charpy impact strength, a test piece having a notch (type A) was used, and the impact was measured by the edgewise test method at a temperature of 23°C.
The impact resistance factors in Tables 2 and 3 indicate factors of Charpy impact strength in the corresponding experimental examples when the Charpy impact strength of the resin to be modified (plant-derived PE or non-plant-derived PP) is 1.0.
The total polyolefin amount indicates a total amount of polyolefins (plant-derived PE, plant-derived $PE_2$, and non-plant-derived PP) contained in each of the experimental examples.

[6] Morphology

The phase structure was observed using each of the test pieces of Experimental Example 2-1 and Experimental Example 2-5. Of these test pieces, the test piece of Experimental Example 2-1 is the same as the test piece of Experimental Example 1-6 in [6] of <<Example 1». The test piece of Experimental Example 2-5 is the same as the test piece of Experimental Example 1-8 in [6] of «Example 1». The results are as described in [6] of «Example 1», and the effects are as described in [7] of «Example 1».

[7] Effects of Example 2

From the results of Experimental Example 2-3 and Experimental Example 2-7 in Table 2, it can be seen that it is difficult to obtain a sufficient modification effect when the modifier is blended with the non-plant-derived PP (block polypropylene) at a blending ratio (on a mass basis) of 4 : 1. On the other hand, from the results of Experimental Example 2-2 and Experimental Example 2-6, it can be seen that a high modification effect is obtained when the modifier is blended with the non-plant-derived PP (block polypropylene) at a blending ratio (on a mass basis) of 1 : 1.
From the results of Experimental Example 2-2 and Experimental Example 2-6, the total plant-derived resin amount of Experimental Example 2-2 having a Charpy impact strength of 71 kJ/m$^2$ is 45 mass%. The total plant-derived resin amount of Experimental Example 2-6 having a Charpy impact strength of 71 kJ/m$^2$ is 45 mass%. That is, it can be seen that substantially the same impact resistance and environmental performance were obtained in Experimental Example 2-2 in which the polyamide proportion and the polyethylene proportion in the modifier satisfy $R_{PA} > R_{PE2}$ and in Experimental Example 2-6 in which the polyamide proportion and the polyethylene proportion in the modifier satisfy $R_{PA} < R_{PE2}$.
On the other hand, from the results in Table 3, it can be seen that while the modification effect on the plant-derived PE (polyethylene) is 2.2 times in Experimental Example 2-10 and 3.8 times in Experimental Example 2-14, a high modification effect of 4.7 times was obtained in both of Experimental Example 2-2 and Experimental Example 2-6, which are modification embodiments of the present application.
The present invention is not limited to the above-described specific examples, and can be variously modified within the scope of the present invention depending on the purpose and intended use.
The above-mentioned examples are for illustrative purposes only and are not to be construed as limiting the present invention. While the present invention has been described by way of examples of typical embodiments, it is understood that the language used in the description and illustration of the present invention is to be regarded as explanatory and illustrative and not restrictive. Modifications within the scope of the appended claims are possible without departing from the scope or spirit of the present invention in its form as detailed herein. Although reference has been made herein to specific structures, materials and examples in the detailed description of the present invention, it is not intended to limit the present invention to the disclosure set forth herein, but rather, to cover all functionally equivalent structures, methods, and uses within the scope of appended claims.

REFERENCE SIGNS LIST

A;    Continuous phase,
B;    Dispersed phase,
$B_1$;    Continuous phase (continuous phase in dispersed phase B),
$B_2$;    Finely dispersed phase (finely dispersed phase in dispersed phase B).

**Claims**

1.  A thermoplastic resin composition obtained by blending a polyethylene, a polyamide, and a compatibilizer,

    wherein the compatibilizer is a modified elastomer having a reactive group that reacts with the polyamide, and
    wherein the polyethylene and the polyamide have a bio-based carbon content rate of 80% or more according to ISO 16620-2.

2.  The thermoplastic resin composition according to claim 1, wherein the polyethylene has an MFR (230°C/2.16 kg) of 20 g/10 min or less.

3.  The thermoplastic resin composition according to claim 1 or 2, wherein the thermoplastic resin composition has an MFR (230°C/2.16 kg) of 3 g/10 min or more.

4.  The thermoplastic resin composition according to any one of claims 1 to 3, wherein the compatibilizer has a copolymerized chain derived from ethylene and an $\alpha$-olefin other than ethylene as a main skeleton, and wherein the reactive group is an acid-modified group.

5.  The thermoplastic resin composition according to any one of claims 1 to 4,

    wherein, when a total amount of the polyethylene, the polyamide, and the compatibilizer is 100 mass%, an amount of the compatibilizer is 1 to 30 mass%, and
    wherein, when a mass proportion of the polyethylene is $R_{PE}$ mass% and a mass proportion of the polyamide is $R_{PA}$ mass% when a total mass proportion of the polyethylene, the polyamide, and the compatibilizer is 100 mass%, $R_{PF}/R_{PA}$ is 0.3 to 3.5.

6.  A molded body, wherein the molded body is composed of the thermoplastic resin composition according to any one of claims 1 to 5.

7.  A method for producing the thermoplastic resin composition according to any one of claims 1 to 5, the method comprising:
    a melt-kneading step of melt-kneading a melt-kneaded product of the polyamide and the compatibilizer with the polyethylene.

8.  A modifier which modifies a polyolefin (provided that polyethylene is excluded) as a resin to be modified and is capable of improving impact resistance of the resin to be modified,

    the modifier comprising a polyethylene ($PE_2$), a polyamide, and a compatibilizer,
    wherein the compatibilizer is a modified elastomer having a reactive group that reacts with the polyamide, and
    wherein the polyethylene ($PE_2$) and the polyamide have a bio-based carbon content rate of 80% or more according to ISO 16620-2.

9.  The modifier according to claim 8, wherein, when a total mass proportion of the polyethylene ($PE_2$), the polyamide, and the compatibilizer is 100 mass%, a mass proportion of the polyethylene ($PE_2$) is $R_{PE2}$ mass%, a mass proportion of the polyamide is $R_{PA}$ mass%, and a mass proportion of the compatibilizer is $R_{CB}$ mass%,

$$1 \le R_{CB} \, (\text{mass}\%) \le 70 \text{ and } 0.3 \le R_{PE2}/R_{PA} \le 3.5.$$

10. The modifier according to claim 8 or 9, wherein the polyethylene ($PE_2$) is a high density polyethylene.

11. The modifier according to any one of claims 8 to 10, wherein the polyethylene ($PE_2$) has an MFR (230°C/2.16 kg) of 20 g/10 min or less.

12. The modifier according to any one of claims 8 to 11, wherein the polyamide has a structure in which a hydrocarbon group sandwiched between adjacent amide bonds in a main chain has a carbon number of a linear-chain part of 6 or more.

13. The modifier according to any one of claims 8 to 12, wherein the compatibilizer has a copolymerized chain derived from ethylene and an $\alpha$-olefin other than ethylene as a main skeleton, and wherein the reactive group is an acid-modified group.

14. The modifier according to any one of claims 8 to 13, wherein the polyolefin is a block polypropylene.

15. The modifier according to any one of claims 8 to 14, wherein the modifier has an MFR (230°C/2.16 kg) of 3 to 17 g/10 min.

16. The modifier according to any one of claims 8 to 15, which is obtained by melt-kneading a melt-kneaded product of the polyamide and the compatibilizer with the polyethylene ($PE_2$).

17. A method for producing a molded body, the method comprising a molding step of molding a raw material obtained by dry-blending a polyolefin (provided that polyethylene is excluded) as a resin to be modified with the modifier according to any one of claims 8 to 16.

18. The method for producing a molded body according to claim 17, wherein, when a total amount of the resin to be modified and the modifier is 100 mass%, an amount of the modifier is 30 to 70 mass%.

[FIG. 1]

[FIG. 2]

[FIG. 3]

[FIG. 4]

[FIG. 5]

[FIG. 6]

## INTERNATIONAL SEARCH REPORT

| International application No. |
|---|
| PCT/JP2021/026628 |

### A. CLASSIFICATION OF SUBJECT MATTER

Int.Cl. C08J3/20(2006.01)i, C08L23/06(2006.01)i, C08L23/26(2006.01)i,
C08L77/00(2006.01)i
FI: C08L23/06, C08L77/00ZAB, C08L23/26, C08J3/20ZCES, C08J3/20CFG
According to International Patent Classification (IPC) or to both national classification and IPC

### B. FIELDS SEARCHED

Minimum documentation searched (classification system followed by classification symbols)
Int.Cl. C08J3/20, C08L23/06, C08L23/26, C08L77/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-154843 A (TOYOTA BOSHOKU CORPORATION) 04 October 2018 (2018-10-04), claims, paragraphs [0012], [0013], [0022]–[0025], examples | 1–18 |
| Y | JP 2020-84161 A (SUMIKASEKISUI FILM CO., LTD.) 04 June 2020 (2020-06-04), claims, paragraphs [0001], [0002], [0020] | 1–18 |
| Y | JP 2020-40258 A (DAI NIPPON PRINTING CO., LTD.) 19 March 2020 (2020-03-19), paragraphs [0056], [0062], [0063] | 1–18 |
| Y | WO 2012/147847 A1 (WINTECH POLYMER LTD.) 01 November 2012 (2012-11-01), paragraph [0037] | 1–18 |
| Y | WO 2012/147845 A1 (WINTECH POLYMER LTD.) 01 November 2012 (2012-11-01), paragraph [0038] | 1–18 |

☒ Further documents are listed in the continuation of Box C.

☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 August 2021 | 31 August 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

29

**INTERNATIONAL SEARCH REPORT**

International application No.

PCT/JP2021/026628

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2020-55161 A (DAI NIPPON PRINTING CO., LTD.) 09 April 2020 (2020-04-09), paragraphs [0077], [0078] | 2-3, 11, 15 |

Form PCT/ISA/210 (second sheet) (January 2015)

| | | |
|---|---|---|
| JP 2018-154843 A | 04 October 2018 | US 2018/0327551 A1<br>claims, paragraphs [0048]-[0051],<br>[0065]-[0072], examples<br>WO 2017/094738 A1<br>EP 3385322 A1<br>SG 11201804488R A<br>CN 108291061 A<br>KR 10-2018-0085772 A<br>RU 2018122464 A |
| JP 2020-84161 A | 04 June 2020 | (Family: none) |
| JP 2020-40258 A | 19 March 2020 | WO 2020/045629 A1 |
| WO 2012/147847 A1 | 01 November 2012 | TW 201311811 A |
| WO 2012/147845 A1 | 01 November 2012 | TW 201305275 A |
| JP 2020-55161 A | 09 April 2020 | (Family: none) |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013094763 A

- WO 2013094764 A